(19) Europäisches Patentamt / European Patent Office / Office européen des brevets

(11) EP 4 509 559 A1

(12) EUROPEAN PATENT APPLICATION
published in accordance with Art. 153(4) EPC

(43) Date of publication:
**19.02.2025 Bulletin 2025/08**

(21) Application number: **24801064.7**

(22) Date of filing: **02.04.2024**

(51) International Patent Classification (IPC):
***C08L 23/04*** (2006.01) ***C08L 23/06*** (2006.01)
***C08L 23/08*** (2025.01) ***C08J 5/18*** (2006.01)
***C08F 10/02*** (2006.01) ***C08F 210/16*** (2006.01)
***C08F 4/16*** (2006.01) ***C08F 4/64*** (2006.01)

(52) Cooperative Patent Classification (CPC):
**C08F 4/16; C08F 4/64; C08F 10/02; C08F 210/16; C08J 5/18; C08L 23/04; C08L 23/06; C08L 23/08**

(86) International application number:
**PCT/KR2024/004219**

(87) International publication number:
**WO 2024/237471 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 KR 20230063112**
**01.04.2024 KR 20240044221**

(71) Applicant: **LG Chem, Ltd.**
**Yeongdeungpo-gu**
**Seoul 07336 (KR)**

(72) Inventors:
- **SONG, Christine Jisoo**
  **Daejeon 34122 (KR)**
- **CHOI, Yi Young**
  **Daejeon 34122 (KR)**
- **LEE, Hyunsup**
  **Daejeon 34122 (KR)**

(74) Representative: **Hoffmann Eitle**
**Patent- und Rechtsanwälte PartmbB**
**Arabellastraße 30**
**81925 München (DE)**

# (54) POLYETHYLENE RESIN COMPOSITION

(57) The present disclosure relates to a polyethylene resin composition having excellent stretchability, mechanical properties, and transparency.

【FIG. 1】

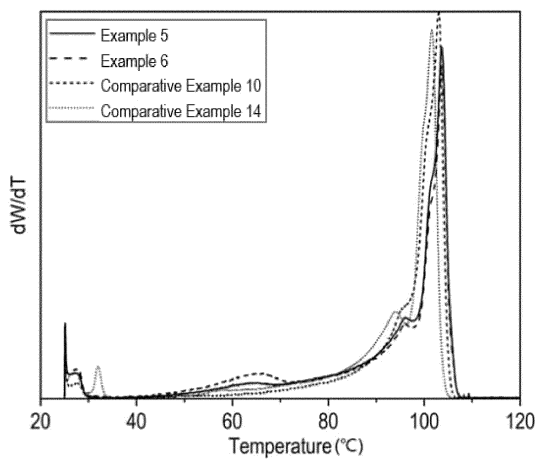


EP 4 509 559 A1

## Description

[TECHNICAL FIELD]

Cross-reference to Related Application(s)

This application claims the benefits of Korean Patent Applications No. 10-2023-0063112 filed on May 16, 2023 and No. 10-2024-0044221 filed on April 1, 2024 with the Korean Intellectual Property Office, the disclosure of which is incorporated herein by reference in its entirety.

The present disclosure relates to a polyethylene resin composition having excellent stretchability, mechanical properties, and transparency.

[BACKGROUND OF ART]

Conventional multilayer film packaging materials used composite materials mixed with polyamide (PA), polyethylene terephthalate (PET), polypropylene (PP), and the like. However, as consumer interest in environmental issues has recently increased, single-material packaging that is easier to recycle is gaining attention. Consequently, there is a trend in the food packaging and distribution industry to manufacture "All-PE" films using only polyethylene (PE), a general-purpose material.

However, polyethylene has the disadvantage of lower heat resistance, stiffness, and transparency compared to resins such as polypropylene and polyterephthalate.

In order to solve this problem, the development of technology to improve mechanical properties by uniaxially or biaxially stretching films manufactured by blown or casting is being actively conducted. In order to apply this technology, the polyethylene must have excellent stretchability and mechanical properties while having appropriate transparency.

Accordingly, research and development are needed to produce polyethylene resin compositions with excellent stretchability, mechanical properties, and transparency.

[DETAILED DESCRIPTION OF THE INVENTION]

[Technical Problem]

In order to solve the problems of the prior art, there is provided a polyethylene resin composition with excellent stretchability, mechanical properties, and transparency.

In addition, there is provided a film exhibiting excellent stretchability, mechanical properties, and transparency, which is manufactured using the polyethylene resin composition.

[Technical Solution]

In order to solve the above problems, there is provided a polyethylene resin composition satisfying the following conditions (a1) to (a5):

(a1) $MI_{2.16}$(ASTM D 1238, 190 °C, 2.16 kg): 0.5 to 3.0 g/10 min
(a2) Density (ASTM D792): 0.940 to 0.955 g/cm$^3$
(a3) MFRR ($MI_{21.6}/MI_{2.16}$): 60 or more and less than 80
(a4) Molecular weight distribution (Mw/Mn): 10 to 14
(a5) In a temperature rising elution fractionation (TREF) analysis, based on a total weight of all eluted fractions,
a content of a polymer fraction eluted in the range of 25 to 90 °C: 20 to 50 wt%, and
a content of a polymer fraction eluted in the range of 90 to 120 °C: 50 to 80 wt%.

In addition, there is provided a method for preparing the polyethylene resin composition, including a first step of producing a first polyethylene by performing a primary polymerization reaction of ethylene monomer in a first reactor in the presence of a Ziegler-Natta catalyst, transferring the resulting polymerization product to a second reactor, and adding one or more of ethylene monomer and C4-C8 alpha olefin monomer to perform a secondary polymerization reaction; a second step of producing a second polyethylene by performing a polymerization reaction of ethylene monomer and C4-C8 alpha-olefin monomer in a separate single reactor in the presence of a catalyst containing a metallocene compound represented by the following Chemical Formula 1 while introducing hydrogen; and a third step of mixing the first polyethylene and the second polyethylene at a weight ratio of 90:10 to 70:30:

[Chemical Formula 1]

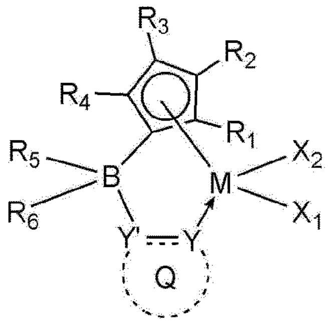

in Chemical Formula 1,

B is boron,
M is a group 4 transition metal,
$R_1$ to $R_4$ are each independently hydrogen, $C_{1-20}$ alkyl, $C_{3-20}$ cycloalkyl, or $C_{6-20}$ aryl, or $R_1$ and $R_2$, or $R_3$ and $R_4$ are connected to each other to form a substituted or unsubstituted $C_{6-60}$ aromatic ring,
$R_5$ and $R_6$ are each independently $C_{1-20}$ alkyl, $C_{3-20}$ cycloalkyl, or $C_{6-20}$ aryl, or $R_5$ and $R_6$ are connected to each other to form a $C_{3-60}$ aliphatic ring or a $C_{6-60}$ aromatic ring,
$X_1$ and $X_2$ are each independently $C_{1-20}$ alkyl or -O(CO)R', wherein R' is $C_{1-20}$ alkyl,
Q is a substituted or unsubstituted $C_{2-60}$ heterocyclic ring comprising at least one selected from the group consisting of N, O, and S,
Y and Y' are elements constituting Q,
Y is N, O, or S, and
Y' is an element of Q and is N or C, wherein Q is adjacent to Y.

In addition, there is provided a film, specifically, a stretched film including the polyethylene resin composition.

[ADVANTAGEOUS EFFECTS]

According to the present disclosure, there are provided a polyethylene resin composition exhibiting excellent stretchability, mechanical properties, and transparency, and a film manufactured using the same.

[BRIEF DESCRIPTION OF THE DRAWINGS]

FIG. 1 is a graph showing the results of temperature rising elution fractionation (TREF) analysis for the polyethylene resin compositions of Examples 5 and 6, and Comparative Examples 10 and 14.

[DETAILED DESCRIPTION OF THE EMBODIMENTS]

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this specification, specify the presence of stated features, numbers, steps, components, or combinations thereof, but do not preclude the presence or addition of one or more other features, numbers, steps, components, or combinations thereof.

In addition, the "polyethylene" or "ethylene (co)polymer" is a concept including both an ethylene homopolymer and/or a copolymer of ethylene and alpha-olefin.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the polyethylene resin composition of the present disclosure will be described in detail.

The polyethylene resin composition according to the present disclosure can exhibit excellent stretchability, mechanical properties, and transparency by controlling the melt index, density, weight average molecular weight (Mw), and content according to crystallinity.

Specifically, the polyethylene resin composition satisfies the following conditions (a1) to (a5):

(a1) $MI_{2.16}$ (ASTM D 1238, 190 °C, 2.16 kg): 0.5 to 3.0 g/10 min
(a2) Density (ASTM D792): 0.940 to 0.955 g/cm$^3$
(a3) MFRR ($MI_{21.6}/MI_{2.16}$): 60 or more and less than 80
(a4) Molecular weight distribution (Mw/Mn): 10 to 14
(a5) In a temperature rising elution fractionation (TREF) analysis, based on the total weight of all eluted fractions,
a content of a polymer fraction eluted in the range of 25 to 90 °C: 20 to 50 wt%; and
a content of a polymer fraction eluted in the range of 90 to 120 °C: 50 to 80 wt%.

Specifically, the polyethylene resin composition shows a bimodal molecular weight distribution curve in a molecular weight distribution curve having a log value (log Mw) of a weight average molecular weight (Mw, g/mol) on the x-axis, and a molecular weight distribution (dwt/dlogMw) with respect to the log value on the y-axis in GPC analysis.

In the present disclosure, the bimodal molecular weight distribution means that the molecular weight distribution curve has two peaks on a GPC graph. At this time, it also includes the case where the two peaks do not exist separately in the form of independent peaks, but partially overlap and exist as a shoulder peak without a minimum value between the maximum values of the two peaks. In other words, the bimodal structure is defined when it cannot be interpreted as a single peak forming a normal distribution, but can instead be deconvoluted into two distributions.

Such a bimodal molecular weight distribution indicates an increase in the distribution of both low and high molecular weight components in the polyethylene resin composition. Due to this molecular weight distribution structure, improved physical properties can be exhibited. In particular, compared to polyethylene resin compositions with a unimodal molecular weight distribution, it can enhance the molecular structure favorable for biaxial stretching, resulting in superior stretchability

Generally, biaxially oriented polyethylene (BOPE) films are produced by stretching a cast sheet in both the machine direction (MD) and the transverse direction (TD). Since biaxial stretching must be performed from MD stretching to TD stretching, excellent stretchability is required for polyethylene used in BOPE films.

To ensure stretchability in polyethylene, secondary crystallization should occur as late as possible during stretching in the machine direction (MD). Additionally, the polyethylene should have a structure that enables interlamellar lateral linking between lamellae, allowing for subsequent stretching in the transverse direction (TD).

The polyethylene resin composition according to the present disclosure has a controlled molecular structure achieved through the optimal blending of a first polyethylene (HDPE) with a high density and controlled properties such as MI and a low-density second polyethylene (LDPE).

Specifically, in the polyethylene resin composition according to the present disclosure, the first polyethylene can strengthen rigidity through optimization of the ultra-high molecular weight region, and the second polyethylene can strengthen the low-molecular weight and low-crystalline region for inter-lamellar chain movement, thereby improving stretchability of the resin composition.

In addition, the polyethylene resin composition according to the present disclosure exhibits normal comonomer distribution, and can exhibit excellent biaxial stretchability by β-relaxation.

β-relaxation is caused by the movement of polymer chains between lamellar crystals, and this increase in fluidity can result in excellent stretchability during film production.

Such β-relaxation can be confirmed by the presence of a peak (β-relaxation peak) occurring at -40 °C to 10 °C in the temperature-dependent loss modulus graph obtained from Dynamic Mechanical Analysis (DMA) of polyethylene resin compositions.

Furthermore, the polyethylene resin composition according to the present disclosure has an optimized content distribution depending on crystallinity. Such optimized crystal distribution can be confirmed through TREF analysis.

Specifically, the polyethylene resin composition according to the present disclosure satisfies the following conditions in TREF analysis:

based on the total weight of all eluted fractions,
a content of a polymer fraction eluted in the range of 25 to 90 °C: 20 to 50 wt%; and
a content of a polymer fraction eluted in the range of 90 to 120 °C: 50 to 80 wt%.

More specifically, the polyethylene resin composition has a content of a polymer fraction eluted in the range of 25 to 90 °C of 20 wt% or more, 25 wt% or more, or 30 wt% or more, and 50 wt% or less, 45 wt% or less, 43 wt% or less, or 40 %

or less based on the total weight of all eluted fractions in TREF analysis.

In addition, the polyethylene resin composition has a content of a polymer fraction eluted in the range of 90 to 120 °C of 50 wt% or more, 55 wt% or more, 57 wt% or more, or 60 wt% or more, and 80 wt% or less, 75 wt% or less, or 70 wt% or less based on the total weight of all eluted fractions in TREF analysis.

Further, the polyethylene resin composition may further satisfy the following conditions in TREF analysis:

based on the total weight of all eluted fractions,
a content of a polymer fraction eluted in the range of 40 to 70 °C: 1 to 30 wt%; and
a content of a polymer fraction eluted in the range of 100 to 105 °C: 30 to 45 wt%.

More specifically, the polyethylene resin composition has a content of a polymer fraction eluted in the range of 45 to 70 °C of 1 wt% or more, 2 wt% or more, 2.5 wt% or more, or 7 wt% or more, and 30 wt% or less, 25 wt% or less, 22 wt% or less, or 15 wt% or less based on the total weight of all eluted fractions in TREF analysis.

Further, the polyethylene resin composition has a content of a polymer fraction eluted in the range of 100 to 105 °C of 30 wt% or more, 33 wt% or more, or 35 wt% or more, and 45 wt% or less, 44.5 wt% or less, or 40 wt% or less based on the total weight of all eluted fractions in TREF analysis.

In TREF analysis, a lower elution temperature indicates lower crystallinity. The polymer fraction eluted in the range of 25 to 90 °C and the polymer fraction eluted in the range of 40 to 70 °C are all low-crystalline fractions. When satisfying the aforementioned content conditions, stretchability, toughness, and transparency of the polyethylene resin composition can be increased.

In addition, the polymer fraction eluted in the range of 90 to 120 °C and the polymer fraction eluted in the range of 100 to 105 °C are all high-crystalline fractions, and as they satisfy the above content conditions, stiffness of the polyethylene resin composition can be improved.

In particular, the polyethylene resin composition can exhibit excellent stiffness and heat resistance when manufacturing a stretched film, because it has a high-crystalline fraction content of 30 wt% or more.

Meanwhile, the content ratio of the fractions eluted in each elution temperature range of the polyethylene resin composition is calculated based on the total weight of all eluted fractions obtained through TREF analysis, and the content ratio of the polymer fractions eluted in the corresponding temperature range is calculated as a percentage (wt%).

In addition, the detailed measurement method and conditions for TREF analysis of the polyethylene resin composition are as described in Experimental Examples below.

In addition to the above-described molecular structure, the polyethylene resin composition according to the present disclosure may have a melt index ($MI_{2.16}$) measured at a 190 °C under a load of 2.16 kg according to the ASTM D1238 standard of 0.5 g/10 min or more, and 3.0 g/10min or less.

Generally, the lower the MI, the better the melt strength. As a result, when producing MDO films, which prioritize blown stability (or bubble stability), minimizing thickness variations or neck-in phenomena reduces losses, thereby improving the yield and processability. However, if the MI is excessively low, it can lead to excessive processing load during the production of MDO films, making film extrusion difficult. Additionally, during uniaxial stretching, there is a problem in that the temperature should be increased to lower the processing viscosity. On the other hand, a higher MI results in better flowability, making it advantageous for the production of BOPE films using the cast process. In addition, when performing a biaxial stretching process after manufacturing a cast sheet, a low molecular weight is required, so MI must be high. However, if the MI is excessively high, the processing viscosity becomes too low, which reduces process stability during extrusion and stretching. Therefore, this invention controls the melt index of the polyethylene resin composition within the aforementioned range, ensuring excellent processability and favoring both extrusion and stretching processes.

More specifically, the melt index ($MI_{2.16}$) may be 0.5 g/10min or more, 0.8 g/10min or more, 0.85 g/10min or more, 0.87 g/10min or more, 0.94 g/10min or more, 1 g/10min or more, 1.2 g/10min or more, 1.21 g/10min or more, or 1.3 g/10min or more, and 3.0 g/10min or less, 2.5 g/10min or less, 2.0 g/10min or less, 1.5 g/10min or less, 1.49 g/10min or less, or 1.45 g/10min or less.

Additionally, the polyethylene resin composition according to the present disclosure has a high density of 0.940 to 0.955 g/cm$^3$. Accordingly, excellent strength can be exhibited. More specifically, the density of the polyethylene resin composition may be 0.940 g/cm$^3$ or more, 0.942 g/cm$^3$ or more, or 0.944 g/cm$^3$ or more, and 0.955 g/cm$^3$ or less, 0.954 g/cm$^3$ or less, 0.951 g/cm$^3$ or less, 0.950 g/cm$^3$ or less, or 0.949 g/cm$^3$ or less.

Meanwhile, the density of the polyethylene resin composition is measured according to the ASTM D792 standard.

In addition, the polyethylene resin composition has MFRR ($MI_{21.6}/MI_{2.16}$) of 60 or more and less than 80, wherein the MFRR ($MI_{21.6}/MI_{2.16}$) is measured by dividing melt index ($MI_{21.6}$) measured at 190 °C under a load of 21.6 kg according to the ASTM D1238 standard by melt index ($MI_{2.16}$) measured at 190 °C under a load of 2.16 kg. More specifically, MFRR ($MI_{21.6}/MI_{2.16}$) may be 60 or more, 60.5 or more, 61 or more, or 63 or more, and less than 80, 77 or less, 75 or less, or 70 or less.

Additionally, the polyethylene resin composition has a molecular weight distribution (Mw/Mn) of 10 or more and 14 or less. More specifically, the molecular weight distribution may be 10 or more, 10.5 or more, 10.8 or more, or 11 or more, and 14 or less, 13.8 or less, 13 or less, or 12 or less.

In the present disclosure, the molecular weight distribution of the polyethylene resin composition may be obtained by measuring the weight average molecular weight (Mw) and the number average molecular weight (Mn) through gel permeation chromatography (GPC) analysis, and dividing the weight average molecular weight (Mw) by the number average molecular weight (Mn). Herein, the weight average molecular weight and the number average molecular weight are values converted to standard polystyrene. The detailed measurement method and conditions are as described in Experimental Example below.

In addition, the polyethylene resin composition according to the present disclosure may further satisfy one or more, two or more, or all three of the conditions (b1) to (b3) below, in addition to the above physical property requirements:

(b1) Weight average molecular weight (Mw): 100,000 to 160,000 g/mol
(b2) Relaxation time: 0.1 to 0.9 seconds
(b3) Shear thinning index: 0.2 to 0.5.

Specifically, the polyethylene resin composition according to the present disclosure may have a weight average molecular weight (Mw) of 100,000 g/mol or more and 160,000 g/mol or less.

An excessively high Mw is disadvantageous for Cast and BOPE manufacturing processes, and an excessively low Mw is disadvantageous for Blown and MDO manufacturing processes due to low melt strength. In the present disclosure, it is possible to perform both Cast and BOPE manufacturing processes as well as Blown and MDO manufacturing processes by controlling the Mw within the aforementioned range.

More specifically, the weight average molecular weight (Mw) of the polyethylene resin composition may be 100,000 g/mol or more, 110,000 g/mol or more, or 120,000 g/mol or more, and 160,000 g/mol or less, 155,000 g/mol or less, 150,000 g/mol or less, 148,000 g/mol or less, 147,000 g/mol or less, or 146,800 g/mol or less.

Meanwhile, in the present disclosure, the weight average molecular weight (Mw) and the number average molecular weight (Mn) of the polyethylene resin composition may be determined through gel permeation chromatography (GPC) analysis, and each is a value converted to standard polystyrene. The detailed measurement method and conditions are as described in Experimental Example below.

Further, the polyethylene resin composition exhibits a long relaxation time of 0.1 to 0.9 seconds.

The bimodal high-density polyethylene used to manufacture conventional stretched films had a short relaxation time and high crystallinity, resulting in poor stretchability. Specifically, a short relaxation time leads to rapid stress relaxation, which increases disorientation and shrinkage, resulting in uneven lamellae, non-uniform film thickness distribution, and film breakage. However, the polyethylene resin composition according to the present disclosure can exhibit a longer relaxation time even under equivalent melt index conditions, and as a result, can exhibit excellent stretchability by mixing a second polyethylene with a long relaxation time and low crystallinity during manufacturing.

Meanwhile, the relaxation time of the polyethylene resin composition may be determined by continuously applying strain (0.5%) within the linear viscosity range at a temperature of 190 °C and an angular frequency of 0.01 Hz to 100 Hz (0.0628 rad/s to 628 rad/s) using a rotational rheometer, and performing an oscillatory shear experiment to measure the viscosity of the polyethylene resin composition, followed by calculation using the Carreau-Yasuda Model of Equation 1 below.

[Equation 1]

$$\eta(\dot{\gamma}) = \eta_0[1 + (\lambda\dot{\gamma})^a]^{\frac{n-1}{a}}$$

in Equation 1,

the $\eta$ is a viscosity (Pa·s) of the polyethylene resin composition measured above, and
the $\eta_0$ is a zero-shear viscosity (Pa·s), which is the viscosity in the region where the viscosity does not change as the angular frequency approaches zero. In the present disclosure, the zero-shear viscosity can be determined by fitting a log-log graph with the angular frequency (unit: Hz) on the x-axis and the viscosity $\eta$ (unit: Pa·s) of the polyethylene resin composition measured above on the y-axis to the Carreau-Yasuda Model represented by the Equation 1.

Additionally, the $\dot{\gamma}$ represents a shear rate applied to the polyethylene resin composition, which is the same value as the angular frequency converted to rad/s according to the Cox-Merz Rule.

The $\lambda$ is a relaxation time (seconds) of the polyethylene resin composition, and can be determined by fitting a log-log graph with the angular frequency (Hz) on the x-axis and the viscosity $\eta$ (Pa·s) of the polyethylene resin composition measured above on the y-axis to the Carreau-Yasuda Model represented by the Equation 1.

Further, the n is a shear thinning index, and can be determined by fitting a log-log graph with the angular frequency (Hz) on the x-axis and the viscosity $\eta$ (Pa·s) of the polyethylene resin composition measured above on the y-axis to the Carreau-Yasuda Model represented by the Equation 1.

The a is a shape parameter that transitions from Newtonian plateau to power law region, and can be determined by fitting a log-log graph with the angular frequency (Hz) on the x-axis and the viscosity $\eta$ (Pa·s) of the polyethylene resin composition measured above on the y-axis to the Carreau-Yasuda Model represented by the Equation 1.

More specifically, the polyethylene resin composition may have a long relaxation time of 0.1 seconds or more, 0.15 seconds or more, 0.17 seconds or more, or 0.2 seconds or more, and 0.9 seconds or less, 0.89 seconds or less, 0.7 seconds or less, 0.68 seconds or less, or 0.65 seconds or less.

The method for measuring the relaxation time of the polyethylene resin composition will be described in detail in Experimental Examples below.

Additionally, the polyethylene resin composition has a shear thinning index of 0.2 to 0.5.

The shear thinning index indicates the crystallization rate and the uniformity of the crystallization rate. The higher the shear thinning index, the slower the crystallization rate, and the higher the uniformity of the crystallization rate, indicating excellent stretchability. The polyethylene used to manufacture conventional stretched films had high crystallinity and thus exhibited a low shear thinning index. Accordingly, the crystallization rate was fast and the uniformity of the crystallization rate was low, resulting in unstable crystallization behavior and deteriorated stretchability. On the other hand, the polyethylene resin composition according to the present disclosure exhibits a high shear thinning index by using a mixture of a second polyethylene with a long relaxation time and low crystallinity during production. Accordingly, the crystallization rate is slow and the uniformity of the crystallization rate is high, showing stable crystallization behavior and excellent stretchability. Moreover, as the shear thinning index is within the above-mentioned range, it can exhibit better stretchability.

More specifically, the polyethylene resin composition may exhibit a shear thinning index of 0.2 or more, 0.22 or more, or 0.25 or more, and 0.5 or less, 0.4 or less, or 0.36 or less.

In the present disclosure, the shear thinning index of the polyethylene resin composition may be determined by continuously applying strain (0.5%) within the linear viscosity range at a temperature of 190 °C and an angular frequency of 0.01 Hz to 100 Hz (0.0628 rad/s to 628 rad/s) using a rotational rheometer, and performing an oscillatory shear experiment to measure the viscosity of the polyethylene resin composition, followed by fitting a log-log graph with the angular frequency (Hz) on the x-axis and the viscosity $\eta$ (Pa·s) of the polyethylene resin composition measured above on the y-axis to the Carreau-Yasuda Model represented by the Equation 1.

The polyethylene resin composition according to the present disclosure satisfies all of the above molecular structure and physical property conditions, and thus can exhibit excellent stretchability, high mechanical properties, and transparency. As a result, when manufacturing a biaxially stretched film, there is no risk of defects such as breakage or shrinkage during stretching in the TD direction, and the produced biaxially stretched film can exhibit excellent stretchability, high mechanical strength and transparency.

Meanwhile, the polyethylene resin composition according to the present disclosure includes a first polyethylene with a density (ASTM D792) of 0.950 g/cm$^3$ or more and $MI_{2.16}$ (ASTM D1238, 190 °C, 2.16 kg) of 0.5 to 2 g/10min; and a second polyethylene with a density of 0.925 g/cm$^3$ or less and $MI_{2.16}$ (ASTM D1238, 190 °C, 2.16 kg) of 1 to 5 g/10 min.

The first polyethylene is manufactured by a multimodal slurry polymerization process using a plurality of reactors and a Ziegler-Natta catalyst, which is advantageous for wide molecular weight distribution, thereby satisfying all of the above physical property conditions and further satisfying the following conditions (c1) to (c5). Accordingly, the first polyethylene can enhance stiffness and rigidity by increasing the content of the ultra-high molecular weight region in the polyethylene resin composition:

(c1) Density (ASTM D792): 0.950 g/cm$^3$ or more, or 0.952 g/cm$^3$ or more, and 0.965 g/cm$^3$ or less, 0.960 g/cm$^3$ or less, or 0.958 g/cm$^3$ or less

(c2) $MI_{2.16}$ (ASTM D1238, 190 °C, 2.16 kg): 0.5 g/10min or more, 0.8 g/10min or more, or 1 g/10min or more, and 2 g/10min or less, or 1.5 g/10min or less

(c3) MFRR ($MI_{21.6}/MI_{2.16}$): 50 or more, or 80 or more, and 100 or less, 90 or less, or 85 or less

(c4) Weight average molecular weight (Mw): 130,000 g/mol or more, 140,000 g/mol or more, or 142,000 g/mol or more, and 160,000 g/mol or less, 155,000 g/mol or less, or 150,000 g/mol or less

(c5) Molecular weight distribution (Mw/Mn): 10 or more, 13 or more, 14 or more, or 14.1 or more, and 16 or less, 15.5 or less, or 15.2 or less.

The first polyethylene may specifically be one or more of an ethylene homopolymer and an ethylene/C4-C8 alpha

olefin copolymer. Additionally, the ethylene/C4-C8 alpha olefin copolymer may be an ethylene/1-butene copolymer.

Meanwhile, the second polyethylene is manufactured by a unimodal slurry polymerization process using a single reactor and a metallocene catalyst, thereby satisfying the following conditions (d1) to (d5). Accordingly, the second polyethylene can enhance stretching processability by strengthening the low molecular weight crystallinity for inter-lamellar chain movement in the polyethylene resin composition:

(d1) Density (ASTM D792): 0.910 $g/cm^3$ or more, and 0.925 $g/cm^3$ or less, 0.920 $g/cm^3$ or less, or 0.918$g/cm^3$ or less
(d2) $MI_{2.16}$ (ASTM D1238, 190 °C, 2.16 kg): 1 g/10min or more, and 5 g/10min or less, or 3 g/10min or less
(d3) MFRR ($MI_{21.6}/MI_{2.16}$): 10 or more, or 15 or more, and 50 or less, or 20 or less
(d4) Weight average molecular weight (Mw): 50,000 g/mol or more, or 70,000 g/mol or more, and 130,000 g/mol or less, or 120,000 g/mol or less
(d5) Molecular weight distribution (Mw/Mn): 1 or more, 2 or more, or 2.4 or more, and 10 or less, 3 or less, or 2.5 or less.

Meanwhile, the polyethylene resin composition exhibits superior stretchability as it shows a longer relaxation time and a slower crystallization rate. In the case of the first polyethylene, there is a disadvantage in that the relaxation time is short due to the high density and the stretchability is poor due to the high crystallinity. In contrast, the second polyethylene has a long relaxation time and a high shear thinning index, and exhibits a $T_\beta$ peak in the loss modulus (E") curve, thereby compensating for the disadvantages of the first polyethylene.

The second polyethylene may be one or more of an ethylene/C4-C8 alpha olefin copolymer, and more specifically, may be an ethylene/1-hexene copolymer or an ethylene/1-octene copolymer.

The first polyethylene and the second polyethylene are included at a weight ratio of 90:10 to 70:30. When the above weight ratio conditions are satisfied, it is easy to achieve the physical properties of the polyethylene resin composition described above, and the improvement effect is also superior. More specifically, the first polyethylene and the second polyethylene may be mixed at a weight ratio of 90:10 to 77:23, 90:10 to 80:20, 90:10 to 83:17, 83:17 to 70:30, 80:20 to 70:30, or 77:23 to 70:30.

Meanwhile, the polyethylene resin composition according to the present disclosure may be prepared by a preparation method including a first step of producing a first polyethylene by performing a primary polymerization reaction of ethylene monomer in a first reactor in the presence of a Ziegler-Natta catalyst, transferring the resulting polymerization product to a second reactor, and adding one or more of ethylene monomer and C4-C8 alpha olefin monomer to perform a secondary polymerization reaction;

a second step of producing a second polyethylene by performing a polymerization reaction of ethylene monomer and C4-C8 alpha-olefin monomer in a separate single reactor in the presence of a catalyst containing a metallocene compound represented by the following Chemical Formula 1 while introducing hydrogen; and
a third step of mixing the first polyethylene and the second polyethylene at a weight ratio of 90:10 to 70:30:

[Chemical Formula 1]

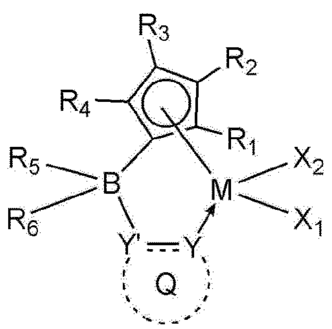

in Chemical Formula 1,

B is boron,
M is a group 4 transition metal,
$R_1$ to $R_4$ are each independently hydrogen, $C_{1-20}$ alkyl, $C_{3-20}$ cycloalkyl, or $C_{6-20}$ aryl, or $R_1$ and $R_2$ or $R_3$ and $R_4$ are connected to each other to form a substituted or unsubstituted $C_{6-60}$ aromatic ring,
$R_5$ and $R_6$ are each independently $C_{1-20}$ alkyl, $C_{3-20}$ cycloalkyl, or $C_{6-20}$ aryl, or $R_5$ and $R_6$ are connected to each other to form a $C_{3-60}$ aliphatic ring or a $C_{6-60}$ aromatic ring,

$X_1$ and $X_2$ are each independently $C_{1-20}$ alkyl or -O(CO)R', wherein R' is $C_{1-20}$ alkyl,
Q is a substituted or unsubstituted $C_{2-60}$ heterocyclic ring containing at least one selected from the group consisting of N, O, and S,
Y and Y' are elements constituting Q,
Y is N, O, or S, and
Y' is an element of Q and is N or C, wherein Q is adjacent to Y.

Unless otherwise specified herein, following terms may be defined as follows.
The halogen may be fluoro (F), chloro (Cl), bromo (Br), or iodo (I).
The alkyl may be linear or branched alkyl. Specifically, the $C_{1-20}$ alkyl may be $C_{1-20}$ linear alkyl; $C_{1-10}$ linear alkyl; $C_{1-5}$ linear alkyl; $C_{3-20}$ branched alkyl; $C_{3-15}$ branched alkyl; or $C_{3-10}$ branched alkyl. More specifically, $C_{1-20}$ alkyl may be a methyl group, an ethyl group, an n-propyl group, an iso-propyl group, an n-butyl group, an iso-butyl group, a tert-butyl group, an n-pentyl group, or an iso-pentyl group, but the present disclosure is not limited thereto. Meanwhile, as used herein, "iPr" refers to an iso-propyl group.
The cycloalkyl may be cyclic alkyl. Specifically, the $C_{3-20}$ cycloalkyl may be $C_{3-20}$ cyclic alkyl; $C_{3-15}$ cyclic alkyl; or $C_{3-10}$ cyclic alkyl. More specifically, it may be cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, or the like, but the present disclosure is not limited thereto. Meanwhile, as used herein, "Cy" refers to C3 to C6 cycloalkyl.
The alkenyl may be linear, branched, or cyclic alkenyl. Specifically, the $C_{2-20}$ alkenyl may be $C_{2-20}$ linear alkenyl, $C_{2-10}$ linear alkenyl, $C_{2-5}$ linear alkenyl, $C_{3-20}$ branched alkenyl, $C_{3-15}$ branched alkenyl, $C_{3-10}$ branched alkenyl, $C_{5-20}$ cyclic alkenyl or $C_{5-10}$ cyclic alkenyl. More specifically, the $C_{2-20}$ alkenyl may be ethenyl, propenyl, butenyl, pentenyl, cyclohexenyl, or the like.
The alkoxy may be a linear, branched, or cyclic alkoxy group. Specifically, the $C_{1-20}$ alkoxy may be a $C_{1-20}$ linear alkoxy group; a $C_{1-10}$ linear alkoxy group; a $C_{1-5}$ linear alkoxy group; a $C_{3-20}$ branched or cyclic alkoxy group; a $C_{3-15}$ branched or cyclic alkoxy group; or a $C_{3-10}$ branched or cyclic alkoxy group. More specifically, the $C_{1-20}$ alkoxy may be methoxy, ethoxy, n-propoxy, iso-propoxy, n-butoxy, iso-butoxy, tert-butoxy, n-pentoxy, iso-pentoxy, neo-pentoxy, or cyclohexyloxy, but the present disclosure is not limited thereto.
The alkoxyalkyl may have a structure including $-R_a-O-R_b$, and may be a substituent in which one or more hydrogens of alkyl ($-R_a$) are substituted with alkoxy ($-O-R_b$). Specifically, the $C_{2-20}$ alkoxyalkyl may be methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, or the like.
The aryl may be a monocyclic, bicyclic or tricyclic aromatic hydrocarbon. According to an embodiment of the present disclosure, the aryl may have 6 to 60 carbon atoms, or 6 to 20 carbon atoms. Specifically, the aryl may be phenyl, naphthyl, anthracenyl, dimethylanilinyl, anisolyl, or the like, but is not limited thereto.
The heteroaryl is heteroaryl containing at least one of O, N, and S as a heterogeneous element, and may have 2 to 60 carbon atoms, or 2 to 20 carbon atoms, although the number of carbon atoms is not particularly limited. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyridinyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, or the like, but the present disclosure is not limited thereto.
In addition, the heterocyclic ring includes both an aliphatic ring containing at least one selected from the group consisting of N, O and S and an aromatic ring containing at least one selected from the group consisting of N, O and S.
In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.
The above-mentioned substituents may be optionally substituted with one or more substituents selected from the group consisting of a hydroxyl group; halogen; alkyl or alkenyl, aryl, alkoxy; alkyl or alkenyl, aryl, alkoxy containing at least one heteroatom of Group 14 to 16 heteroatoms; amino; silyl; alkylsilyl or alkoxysilyl; a phosphine group; a phosphide group; a sulfonate group; and a sulfone group within the range of exhibiting the same or similar effects as the desired effects.
Hereinafter, each step is described in detail.
First, the first step for preparing the polyethylene resin composition according to the present disclosure is a production step of a first polyethylene.

Specifically, a first polyethylene can be produced by performing primary polymerization of ethylene monomer in the presence of a Ziegler-Natta catalyst in a first reactor, transferring the resulting polymerization product to a second reactor, and adding at least one of ethylene monomer and C4-C8 alpha olefin monomer to perform a secondary polymerization reaction.

As the first polyethylene is produced by slurry polymerization using a plurality of reactors, two or more reactors, for example, two or more continuous stirred tank reactors (CSTR) may be used. Specifically, in the above preparation method, a first reactor in which a primary slurry polymerization reaction for producing a first polyethylene occurs, and a second reactor, connected to the first reactor, in which a secondary slurry polymerization reaction occurs may be used.

Additionally, the polymerization process in the first and second reactors is performed by a slurry polymerization process.

In the case of solution polymerization, the catalyst is activated by high temperature and high pressure reaction, so that the produced resin composition exhibits deteriorated stretchability due to narrow molecular weight distribution (MWD) and low high-molecular-weight tail content. However, since the slurry polymerization process in the present disclosure is performed at a relatively low temperature, it is possible to secure a molecular structure having a wide MWD and a high high-molecular-weight tail content required for a polyethylene resin composition for producing a transparent film. As a result, excellent biaxial stretchability can be achieved.

The Ziegler-Natta catalyst used to prepare the first polyethylene may specifically be a magnesium-supported titanium catalyst. Further, the magnesium-supported titanium catalyst may further include halogenated hydrocarbon.

Specifically, the magnesium-supported titanium catalyst includes a solid magnesium support. Examples of the magnesium support may include magnesium, magnesium oxide, magnesium chloride, silica-magnesia, magnesia, etc., and any one thereof or a mixture of two or more thereof may be used. Among them, considering catalytic activity and ease of realizing optimal physical properties of the polyethylene resin composition, the magnesium support may be magnesium.

Meanwhile, the magnesium-supported titanium catalyst includes a titanium-containing compound represented by the following Chemical formula 2 as a main catalyst:

[Chemical formula 2] $Ti(OR^1)_mX^1_{4-m}$

In Chemical Formula 2,

$R^1$ is the same or different and an alkyl group having 1 to 10 carbon atoms,
$X^1$ is a halogen atom, more specifically, Cl, Br, or I**,** and
m is an integer of 0 to 4.

In Chemical formula 2, $R^1$ may be specifically an alkyl group having 1 or more, 2 or more, or 3 or more carbon atoms, and 10 or less, 8 or less, or 5 or less carbon atoms.

Further, $X^1$ may be specifically Br or Cl, and more specifically Cl.

Specific examples of the titanium-containing compound may include titanium tetrachloride ($TiCl_4$) or chlorinated titanium oxide, and any one thereof or a mixture of both may be used.

Further, the catalyst including the titanium-containing compound may include Mg:Ti at a molar ratio of 1:1 to 10:1, 2:1 to 7:1, or 4:1 to 5:1, based on the content of Mg in the magnesium support and the content of Ti in the titanium-containing compound. When included within the above molar ratio range, superior catalytic activity may be achieved.

Further, the shape of the catalyst is not particularly limited, but it may be, for example, in the form of spherical fine particles.

Further, the average particle size of the catalyst may be 5 μm to 100 μm, more specifically, 5 μm or more, 8 μm or more, or 10 μm or more, and 100 μm or less, 50 μm or less, 20 μm or less, or 13 μm or less.

Meanwhile, the average particle size of the catalyst in the present disclosure may be measured by scanning electron microscopy (SEM) observation. Specifically, after obtaining an SEM image in which 100 or more catalyst particles are observed, a random straight line is plotted, and the average size of the catalyst particles may be calculated from the length of the corresponding straight line, the number of particles contained in the straight line, and the magnification.

Further, the magnesium-supported titanium catalyst may further include halogenated hydrocarbon.

Halogenated hydrocarbon changes the electrical properties of titanium by coordinating around titanium, which acts as an active point, and the large volume of halogenated hydrocarbon creates sufficient three-dimensional space between titanium atoms, thereby greatly improving catalytic activity during polyethylene polymerization.

The halogenated hydrocarbon may be specifically an alkane having 1 to 12 carbon atoms, a cycloalkane having 3 to 12 carbon atoms, an alkene having 2 to 12 carbon atoms, an alkyne having 2 to 12 carbon atoms, or an aromatic hydrocarbon having 6 to 30 carbon atoms, which is substituted with one or more halogen groups. The halogen group may be fluoro, chloro, or bromo.

Specific examples may include bromoform, tetrachloroethane, hexachloroethane, pentachloroethane, 1,1,2,2-tetrachloroethane, 1-bromo-1-chloroethane, 1,2-dibromoethane, 1,2-dichloroethane, bromoethane, hexachloropropane, 1,2,3-trichloropropane, 1,2-dichloropropane, 1-chloropropane, 2-chloropropane, chlorobutane, dichlorobutane, 1-chloro-2-methylpropane, n-butyl chloride, tert-butyl chloride, 1-chloro-3-methylbutane, 1-chloropentane, 1,5-dichloropentane, bromopentane, neopentyl chloride, 1-chloroheptane, cyclopropyl bromide, cyclobutyl chloride, cyclohexyl chloride, cyclohexyl bromide, vinylidene chloride, 1,2,3,3-tetrachloropropene, 1,2-dibromo-1-propene, 1,3-dichloropropene, hexachloro-1,3-butadiene, 2-bromo-2-butene, propargyl chloride, chlorobenzene, tetrachlorobenzene, trichlorobenzene, dichlorobenzene, 4-chlorobenzyl chloride, benzyl chloride, or 1,1-dichloro-2-phenylcyclopropane, etc., and any one thereof or a mixture of two or more thereof may be used.

The halogenated hydrocarbon may be included in an amount of 0.1 mol or more, 0.12 mol or more, or 0.13 mol or more, and 500 mol or less, 100 mol or less, 50 mol or less, 10 mol or less, 1 mol or less, or 0.5 mol or less, based on 1 mol of the titanium-containing compound as the main catalyst.

The Ziegler-Natta catalyst may be prepared by a preparation method including a support treatment step of mixing and reacting a raw material of the magnesium support with alcohol; and a titanium-containing compound supporting step of reacting the product resulting from the above step with the titanium-containing compound represented by Chemical formula 1, and further including the step of bringing into contact with and reacting with halogenated hydrocarbon during the support treatment step and the titanium-containing compound supporting step, or after the titanium-containing compound supporting step. Accordingly, the method of preparing the polyethylene resin composition according to the present disclosure includes, before the first step, the step of preparing the Ziegler-Natta catalyst, specifically, the support treatment step and the titanium-containing compound supporting step, and may further include, during the support treatment step and the titanium-containing compound supporting step, or after the titanium-containing compound supporting step, the step of bringing into contact with and reacting with halogenated hydrocarbon.

Specifically, the support treatment step for preparing the Ziegler-Natta catalyst may be performed by mixing and reacting the raw material of the magnesium support with alcohol in a non-polar solvent.

Specific examples of the alcohol may include methanol, ethanol, 1-propanol, isopropanol, n-butanol, isobutanol, 1-pentanol, isopentanol, n-hexanol, 1-octanol, 2-ethyl-1-hexanol, etc., and any one thereof or a mixture of two or more thereof may be used. Among them, ethanol or 2-ethyl-1-hexanol may be used.

The alcohol may be used in an amount of 1 mol or more, 1.5 mol or more, or 2 mol or more, and 10 mol or less, 8 mol or less, or 6 mol or less, based on 1 mol of the raw material of the magnesium support.

Meanwhile, the raw material of the magnesium support may include the magnesium support itself such as magnesium, magnesium oxide, magnesium chloride, or silica-magnesia, etc.; or magnesium alcoholate such as magnesium ethylate, etc., and any one thereof or a mixture of two or more thereof may be used. For example, when magnesium alcoholate is used as the raw material of the magnesium support, it is converted into magnesium chloride by titanium tetrachloride ($TiCl_4$) which is introduced as the main catalyst, and is included as a support in the final catalyst.

The method of mixing the raw material of the magnesium support with alcohol may be specifically performed by adding the alcohol to a slurry which is prepared by mixing the raw material of the magnesium support with a non-polar solvent such as hexane, or adding, to the slurry, a solution in which the alcohol is dissolved in a non-polar solvent, and then stirring the solution at a temperature of 20 °C to 150°C until it becomes a transparent solution. As a result of the above mixing, a homogeneous solution of the magnesium support is obtained, and in the solution, an adduct is formed in which crystals of the magnesium support are surrounded by alcohol molecules.

Next, the step of supporting the titanium-containing compound for preparing the Ziegler-Natta catalyst is performed by reacting the reaction product of the magnesium support and alcohol, which is generated in the support treatment step, with the titanium-containing compound.

Specifically, to the reaction product of the magnesium support and alcohol, which is generated in the support treatment step, the titanium-containing compound is directly added or a solution in which the titanium compound is dissolved in a non-polar solvent is added, and reacted at -50 °C to 120 °C or -20 °C to 80 °C.

The type and content of the titanium-containing compound are as described above.

Further, when the titanium-containing compound is introduced, the reaction product of the magnesium support and alcohol, which is generated in the support treatment step, may be stirred at 10 rpm to 500 rpm, or 50 rpm to 400 rpm.

Meanwhile, when the Ziegler-Natta catalyst is prepared, halogenated hydrocarbon is introduced when alcohol is added to the magnesium support in the support treatment step; halogenated hydrocarbon is introduced when the titanium-containing compound is introduced in the titanium-containing compound supporting step; or after completing the step of supporting the titanium-containing compound, the step of adding and reacting halogenated hydrocarbon may be further performed.

The type and content of the halogenated hydrocarbon are as described above.

The Ziegler-Natta catalyst prepared through the above preparation method may be used as it is during polyethylene polymerization, or may be used as a slurry in a non-polar solvent.

Further, the Ziegler-Natta catalyst may be used together with an organometallic compound represented by the following Chemical Formula 3 as a cocatalyst.

[Chemical Formula 3] $R^2_nMX^2_{(3-n)}$

In Chemical Formula 3,

M is selected from the group consisting of elements of groups IB, IIA, IIIB and IVB in the periodic table,
$R^2$ is the same or different and is an alkyl group having 1 to 10 carbon atoms,
$X^2$ is halogen, and
n is an integer of 1 to 3.

In Chemical Formula 3, M is specifically aluminum, $R^2$ is an alkyl group having 1 to 5 carbon atoms or 2 to 4 carbon atoms, and $X^2$ is Cl or Br.

Specific examples of the organometallic compound represented by Chemical Formula 3 may include triethyl aluminum, methyl aluminum dichloride, methyl aluminum dibromide, dimethyl aluminum chloride, dimethyl aluminum bromide, propyl aluminum dichloride, propyl aluminum dibromide, butyl aluminum dichloride, butyl aluminum dibromide, dibutyl aluminum chloride, dibutyl aluminum bromide, isobutyl aluminum dichloride, isobutyl aluminum dibromide, diisobutyl aluminum chloride, diisobutyl aluminum bromide, hexyl aluminum dichloride, hexyl aluminum dibromide, dihexyl aluminum chloride, dihexyl aluminum bromide, octyl aluminum dichloride, octyl aluminum dibromide, dioctyl aluminum chloride, and dioctyl aluminum bromide, etc., and any one thereof or a mixture of two or more thereof may be used.

Meanwhile, since the cocatalyst affects the polymerization activity of the magnesium-supported catalyst, the polymerization activity of the catalyst may be further increased by controlling the content of cocatalyst. For example, with regard to the organometallic compound represented by Chemical Formula 3, aluminum may be used in an amount of 3 mol or more, 10 mol or more, or 25 mol or more, and 200 mol or less, or 100 mol or less per 1 mol of titanium in the catalyst.

The cocatalyst may be added to the polyethylene polymerization reaction after mixing with the Ziegler-Natta catalyst, or may be separately added before or after the addition of the Ziegler-Natta catalyst. Accordingly, the method of preparing the polyethylene resin composition according to the present disclosure may further include the step of adding the cocatalyst when preparing the first polyethylene in the first step.

In addition, the primary polymerization reaction is performed while introducing hydrogen gas.

Since the input amount of hydrogen gas affects the physical properties of the prepared copolymer, the input amount is appropriately determined depending on the physical properties to be achieved. For example, in the present disclosure, the total input amount of hydrogen gas introduced in the primary polymerization reaction may be 0.001 to 0.5 wt%, based on the total weight of ethylene monomers which are introduced into the first reactor. When hydrogen gas is introduced in the above range, the combined physical properties of the polyethylene resin composition described above may be easily achieved. More specifically, hydrogen gas may be introduced in an amount of 0.001 wt% or more, 0.01 wt% or more, 0.05 wt% or more, or 0.07 wt% or more, and 0.5 wt% or less, 0.3 wt% or less, or 0.15 wt% or less.

The reaction product produced after the polymerization reaction under the above polymerization conditions is continuously transferred to a second reactor connected to the first reactor.

In the second reactor, the additional polymerization reaction occurs between the first polyethylene transferred from the first reactor and the ethylene or the C4 to C10 alpha olefin second comonomer introduced into the second reactor.

The secondary polymerization reaction may be performed in the presence of a catalyst.

In this case, the applicable catalyst is a Ziegler-Natta catalyst, as described in the step 1. Accordingly, the Ziegler-Natta catalysts used in the primary and secondary slurry polymerization reactions may be the same as or different from each other. When the same Ziegler-Natta catalyst is used in the primary and secondary polymerization reactions, it may be easier to control the physical properties of the polyethylene resin composition to be prepared, and accordingly, to achieve the above physical property requirements.

Further, the secondary polymerization reaction may be carried out under conditions with hydrogen addition or without hydrogen addition. For example, when hydrogen gas is introduced, hydrogen gas may be introduced in an amount of 0.001 wt% to 0.05 wt%, based on the total weight of the monomers including the ethylene and the alpha olefin second comonomer introduced into the second reactor.

In addition, during the secondary polymerization reaction, only ethylene may be added without adding a comonomer, or a C4-C8 alpha olefin may be added as a comonomer.

When a C4-C8 alpha olefin is added as a comonomer during the secondary polymerization reaction, the total amount of ethylene and the total amount of comonomer added to the first and second reactors may satisfy a weight ratio of 1:0.001 to 1:0.1. When the total amount of ethylene and the total amount of comonomer added to the first and second reactors satisfy the above weight ratio range, physical properties of the polyethylene resin composition described above can be more easily achieved.

Additionally, the polymerization temperature (T1) and pressure (P1) during the primary polymerization reaction

are higher than the polymerization temperature (T2) and pressure (P2) during the secondary polymerization reaction. By controlling the amount of comonomer introduced and setting higher temperature and pressure during the primary polymerization reaction, it is possible to more easily achieve a bimodal molecular weight distribution and NCD structure in the polyethylene resin composition.

Specifically, the difference (T1-T2) between the polymerization temperature (T1) during the primary polymerization reaction and the polymerization temperature (T2) during the secondary polymerization reaction may be 3 °C or higher, 4 °C or higher, or 5 °C or higher, and 10 °C or lower, 8 °C or lower, or 6 °C or lower.

In addition, the difference (P1-P2) between the pressure (P1) during the primary polymerization reaction and the pressure (P2) during the secondary polymerization reaction may be 2 bar or more, 3 bar or more, or 3.2 bar or more, and 6 bar or less, 5.5 bar or less, or 5.3 bar or less.

In addition, while satisfying the above-described temperature difference and pressure difference, the polymerization temperature (T1) during the primary polymerization reaction may be 70 to 90 °C, and the polymerization temperature (T2) during the secondary polymerization reaction may be 70 to 90 °C in the preparation method according to the present disclosure.

In addition, the pressure (P1) during the primary polymerization reaction may be 5 to 10 bar, and the pressure (P2) during the secondary polymerization reaction may be 1 to 5 bar.

Through the above two-step polymerization process, the first polyethylene satisfying the above-mentioned physical properties is produced.

Subsequently, the second step is a production step of a second polyethylene.

The second polyethylene can be produced by polymerizing ethylene monomer and C4-C8 alpha olefin monomer in a separate single reactor in the presence of a catalyst containing a metallocene compound represented by the Chemical Formula 1, while introducing hydrogen.

The metallocene compound represented by the Chemical Formula 1 employs a bridge structure including a boron anion, unlike the conventionally used CGC (constrained geometry catalyst) type precursor. The conventional CGC type precursor has a neutral bridge structure including silicon, so that the ligand unit is negatively charged. This leads to a structural limitation, and there is a problem in that it is difficult to achieve various physical properties when preparing an olefin polymer.

On the other hand, the metallocene compound represented by the Chemical Formula 1 according to the present disclosure may have a neutral ligand unit, because the bridge structure is negatively charged. The ligand unit of the present disclosure is a heterocyclic ring Q of Chemical Formula 1, wherein Y, which is an element of Q, is coordinated with a metal, and Y', which is an element of Q and adjacent to Y, is connected to a bridge. Accordingly, as the present disclosure employs various neutral ligand units satisfying the above structure, a catalyst having higher activity and higher comonomer incorporation than the conventional CGC precursor can be prepared.

In addition, alkyl or carboxylate is included as a metal substituent of the metallocene compound represented by the Chemical Formula 1, which acts as a good leaving group to promote a reaction with a cocatalyst such as MAO, thereby increasing activity.

Therefore, when the metallocene compound is used, the high melt index of polyethylene may be maintained, the low-molecular-weight component may be reduced, the molecular weight distribution may be narrow, and the SCB content may be increased to increase the effective number of physical cross-links of molecules, thereby preparing a polyethylene having a reduced generation of total volatile organic compounds (TVOCs).

Specifically, in Chemical Formula 1, M may be zirconium (Zr).

Further, in Chemical Formula 1, $R_1$ to $R_4$ may each independently be hydrogen, $C_{1-10}$ alkyl or $C_{6-20}$ aryl, or $R_1$ and $R_2$ or $R_3$ and $R_4$ may be connected to each other to form a substituted or unsubstituted $C_{6-20}$ aromatic ring. Preferably, $R_1$ to $R_4$ may each independently be hydrogen, or methyl, or $R_1$ and $R_2$ or $R_3$ and $R_4$ may be connected to each other to form a benzene ring or a 1,2,3,4-tetrahydronaphthalene ring, wherein the benzene ring or the 1,2,3,4-tetrahydronaphthalene ring may be unsubstituted or substituted with one substituent to four substituents selected from the group consisting of methyl, tert-butyl, and 4-tert-butyl phenyl.

Further, in Chemical Formula 1, $R_5$ and $R_6$ may each independently be $C_{1-10}$ alkyl, or $C_{6-20}$ aryl, or $R_5$ and $R_6$ may be connected to each other to form a $C_{3-20}$ aliphatic ring or a $C_{6-20}$ aromatic ring. Preferably, $R_5$ and $R_6$ may each independently be methyl or phenyl, or $R_5$ and $R_6$ may be connected to each other to form a cyclooctane ring.

More preferably, $R_5$ and $R_6$ may each be phenyl.

Further, in Chemical Formula 1, $X_1$ and $X_2$ may each independently be methyl or acetate.

Further, in Chemical Formula 1, when $X_1$ or $X_2$ is -O(CO)R', R' may specifically be methyl.

Further, in Chemical Formula 1, $X_1$ and $X_2$ may be the same as each other.

Further, in Chemical Formula 1, Q may be a substituted or unsubstituted $C_{2-20}$ heterocyclic ring containing at least one selected from the group consisting of N, O, and S.

Preferably, Q may be a pyridine ring, a quinoline ring, a 4,5-dihydrooxazole ring, a pyrazole ring, or a benzoxazole ring, wherein Q is unsubstituted or substituted with one substituent to four substituents selected from the group consisting

of methyl, isopropyl, and diphenylamino.

More preferably, Q may be a pyridine ring, a 4,5-dihydrooxazole ring, a pyrazole ring, or a benzoxazole ring, wherein Q is unsubstituted or substituted with one substituent to four substituents selected from the group consisting of methyl, isopropyl, and diphenylamino.

Further, in Chemical Formula 1, Y is a hetero atom coordinating with the metal M, and preferably, Y may be N.

Meanwhile, specific examples of the metallocene compound represented by Chemical Formula 1 may include compounds represented by the following structural formulae, but the present invention is not limited thereto:

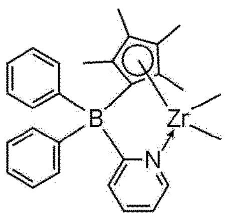
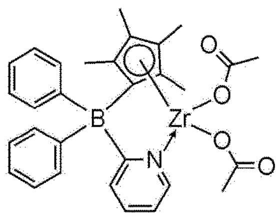
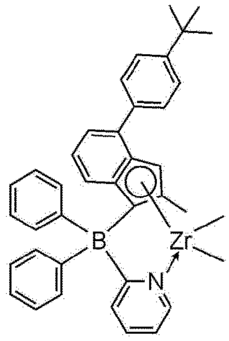

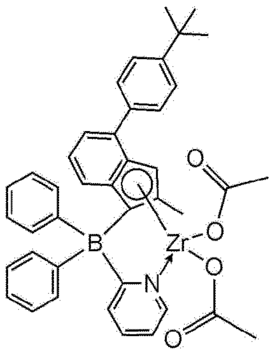
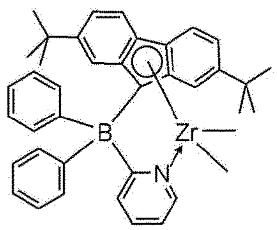
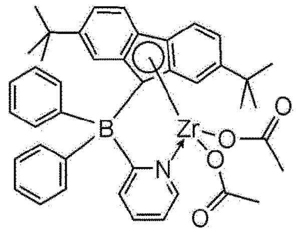

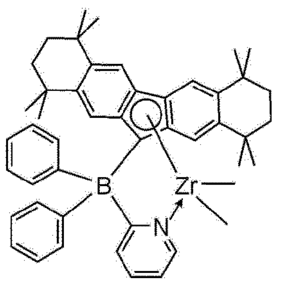
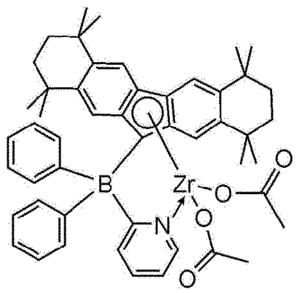
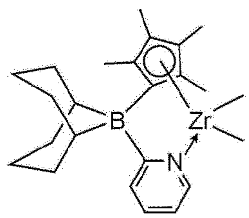

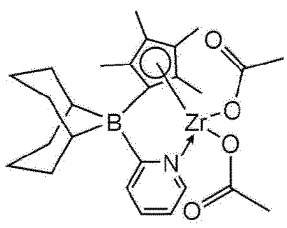
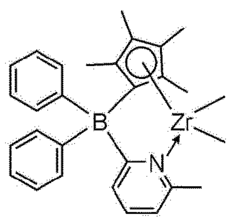
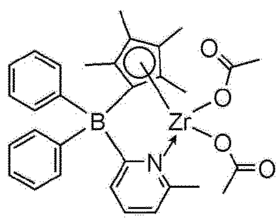

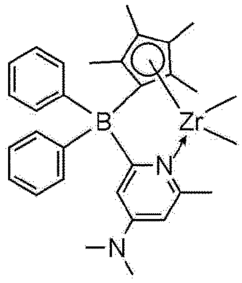
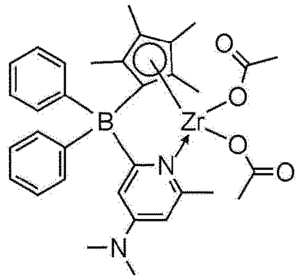
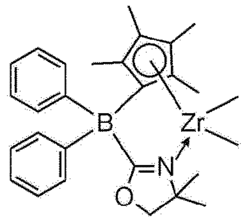

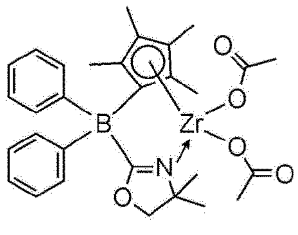
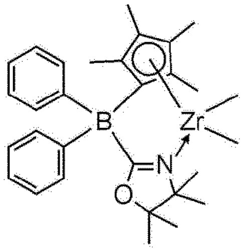
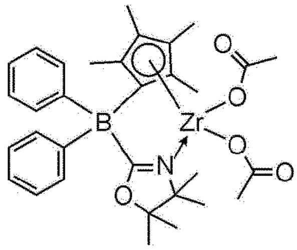

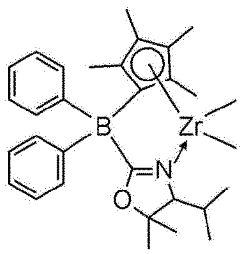
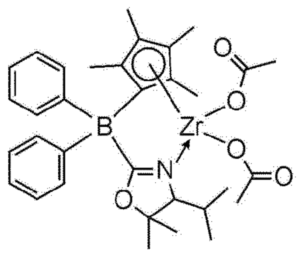
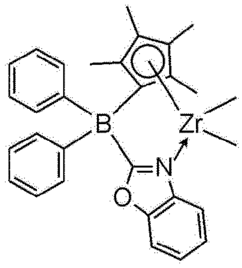

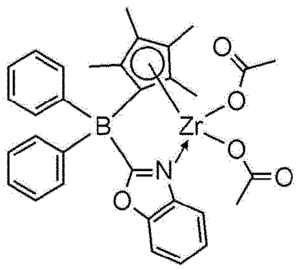
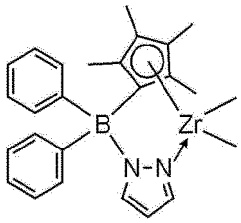
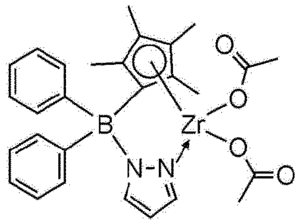

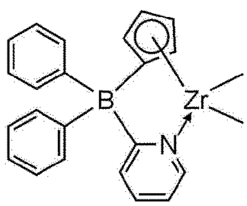
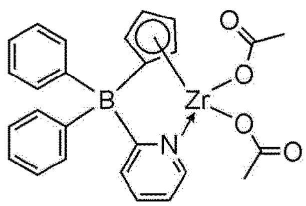
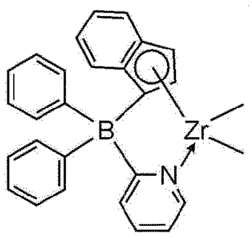

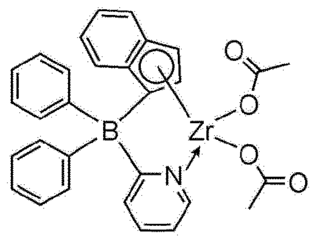

The metallocene compound represented by Chemical Formula 1 may be prepared by a preparation method, for

example, as in the following Reaction Scheme 1, when $X_1$ and $X_2$ are the same as each other, but is not limited thereto, and it may be prepared according to known methods of preparing an organic compound and a metallocene compound. The preparation method will be more embodied in Preparation Example to be described later.

[Reaction Scheme 1]

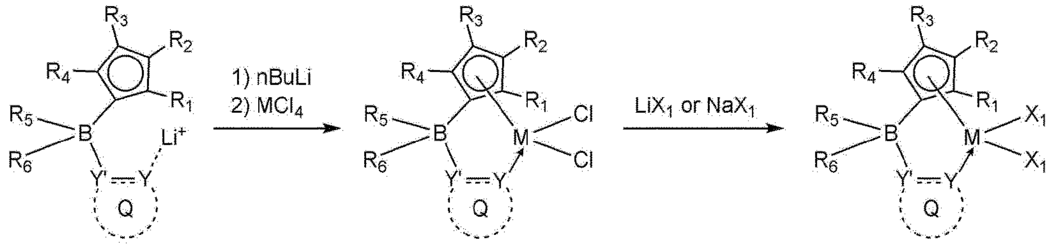


In Reaction Scheme 1, B, M, $R_1$ to $R_6$, $X_1$, $X_2$, Q, Y and Y' are the same as defined in Chemical Formula 1.

Meanwhile, the catalyst composition for producing the second polyethylene may include the metallocene compound of Chemical Formula 1 as a single catalyst, or may include the metallocene compound together with a support and optionally a cocatalyst.

The support may have a hydroxyl group, a silanol group, or a siloxane group having high reactivity on its surface. The support may be surface-modified by calcination, or may be dried to remove moisture from the surface. For example, the support may be silica prepared by calcining silica gel, silica dried at a high temperature, silica-alumina, or silica-magnesia, and it may usually contain oxides, carbonates, sulfates, or nitrates such as $Na_2O$, $K_2CO_3$, $BaSO_4$, $Mg(NO_3)_2$ and the like.

In addition, the cocatalyst may be any cocatalyst used for polymerizing olefins in the presence of a general metallocene catalyst. This cocatalyst causes a bond to be formed between the hydroxyl group on the support and the Group 13 transition metal. In addition, since the cocatalyst is present only on the surface of the support, it can contribute to securing intrinsic properties of the specific hybrid catalyst composition of the present disclosure without a fouling phenomenon, sticking to the wall surface of the reactor or with each other.

In addition, when preparing the second polyethylene, C4 to C8 alpha-olefin comonomers are added. The C4 to C8 alpha-olefin is specifically, a mixture of one or more, or two or more types selected from the group consisting of 1-butene, 1-pentene, 1-hexene, 4-methyl-1-pentene, and 1-octene. Preferably, it may be 1-butene or 1-hexene.

The C4 to C8 alpha-olefin comonomer may be added in an amount of 0.1 to 10 parts by weight, more specifically, 0.1 parts by weight or more, 1 part by weight or more, 5 parts by weight or more, or 6 parts by weight or more, and 10 parts by weight or less, or 8 parts by weight or less, based on 100 parts by weight of ethylene monomer when preparing the second polyethylene. When the above weight ratio conditions are satisfied, the physical properties of the above-described second polyethylene can be more easily achieved.

**In** addition, the polymerization reaction for preparing the second polyethylene is performed while introducing hydrogen.

At this time, the input amount of hydrogen can be appropriately adjusted to realize the physical properties of the second polyethylene described above. For example, in the present disclosure, the input amount of hydrogen gas may be 0.0001 to 0.05 parts by weight, based on the total weight of monomers including ethylene and C4 to C8 alpha olefin comonomers. When hydrogen gas is introduced in the above range, the combined physical properties of the polyethylene resin composition described above can be easily achieved. More specifically, it may be introduced in an amount of 0.0001 parts by weight or more, 0.0005 parts by weight or more, or 0.0007 parts by weight or more, and 0.05 parts by weight or less, 0.005 parts by weight or less, or 0.002 parts by weight or less.

In addition, the polymerization reaction for producing the second polyethylene may be performed at a temperature of 70 to 90 °C and a pressure of 5 to 10 bar.

In addition, the preparation method according to the present disclosure may further include the step of performing an additional polymerization reaction on unreacted monomers contained in the polymerization product in a post reactor after the polymerization reaction for producing the second polyethylene.

At this time, the additional polymerization reaction may be performed under the same reaction conditions as the polymerization reaction, specifically, at a temperature of 70 to 90 °C and a pressure of 5 to 10 bar.

Through the above two-step polymerization process, the second polyethylene satisfying the above physical property conditions is produced.

The step 3 is a preparation step of a polyethylene resin composition by mixing the first polyethylene produced in the first step and the second polyethylene produced in the second step.

The first polyethylene and the second polyethylene may be mixed at an appropriate mixing ratio to realize the

physical properties of the polyethylene resin composition described above. Specifically, the first polyethylene and the second polyethylene may be mixed at a weight ratio of 90:10 to 70:30.

In addition, the mixing process is not particularly limited and may be performed according to a normal mixing process.

Meanwhile, the preparation method according to the present disclosure may further include a step of melting and extruding the obtained mixture after completing the mixing process in the third step.

A pellet-type polyethylene resin composition can be manufactured through the melting and extrusion processes described above.

Since the polymerization product after the polymerization reaction in the first and second steps is obtained in the powder form, the types of applicable antioxidants are limited. Further, since the content of the antioxidants has large variations according to powder, articles manufactured using the same have large variations in their physical properties. In contrast, when the melting and extrusion process is performed, the components including antioxidants are uniformly mixed, and the resulting articles may have uniform physical properties.

Meanwhile, as used herein, a pellet or a pellet-type is a small particle or piece formed by extrusion of raw material, and includes all the shape classified as a pellet in the art, including circle, flat, flake, polygon, rod shapes, etc. The size of pellet is appropriately determined according to the use and shape, and is not specifically limited, but the pellet in the present invention is defined as having an average diameter of 2 mm or more so as to be distinguished from powder having a small average diameter of about 1 mm. In this regard, the "diameter" is the longest distance among any straight distances of the outer circumference surface of the pellet, and it may be measured using imaging microscope, etc.

The melt extrusion process may be performed using a common extruder, and the specific method and conditions thereof are not particularly limited as long as the morphological conditions of the pellet are satisfied.

In addition, during the melt extrusion, one or more additives such as antioxidants, stabilizers, neutralizing agents, slip agents, anti-blocking agents, UV stabilizers, antistatic agents, etc. may be added within the range not deteriorating the physical properties of the polyethylene resin composition. Accordingly, the prepared polyethylene resin composition may further include one or more additives such as antioxidants, neutralizing agents, slip agents, anti-blocking agents, UV stabilizers, and antistatic agents, etc. Meanwhile, in the present invention, the additives do not affect the physical properties of the polyethylene resin composition, and may improve the processability and quality of manufactured products when manufacturing the products using the resin composition.

For example, the antioxidants may include phenolic antioxidants; phosphorus-based antioxidants; amine-based antioxidants, etc., and any one thereof or a mixture of two or more thereof may be used. Specific examples of the antioxidant may include phenolic antioxidants such as tetrakis [methylene-3-(3,5-di-tert-butyl-4-hydroxyphenyl-propionate)]methane (CAS 6683-19-8), 1,3,5-trimethyl-2,4,6-tris(3,5-di-tert-butyl-4-hydroxybenzyl)benzene, etc.; phosphorus-based antioxidants such as tris(2,4-di-tert.-butylphenyl)phosphite, bis(2,4-di-tert-butylphenyl)pentaerythritol diphosphite, bis(2,4-dicumylphenyl)pentaerythritol diphosphite, etc.; or amine-based antioxidants such as phenylnaphthylamine, 4,4'-($\alpha$,$\alpha$-dimethylbenzyl)diphenylamine, and N,N'-di-2-naphthyl-p-phenylenediamine, etc., and any one thereof or a mixture of two or more thereof may be used. In addition, commercially available Irganox™ 1010 (manufactured by BASF), Irganox™ 3114 (manufactured by BASF), Irganox™ 1076 (manufactured by BASF), Irgafos™ 168 (manufactured by BASF), Irgafos™ 626 (manufactured by BASF) or Cyanox™ 1790 (manufactured by CYTEC) may also be used.

Among them, the polyethylene resin composition may include a mixture of a primary phenolic antioxidant and a secondary phosphorus-based antioxidant. In this regard, the primary phenolic antioxidant may be added in an amount of 50 ppm or more, 200 ppm or more, or 250 ppm or more, and 500 ppm or less, or 300 ppm or less, based on the total weight of the mixture of first polyethylene and second polyethylene. The secondary phosphorus-based antioxidant may be added in an amount of 50 ppm or more, 200 ppm or more, or 250 ppm or more, and 500 ppm or less, or 300 ppm or less, based on the total weight of the mixture of first polyethylene and second polyethylene. Therefore, the polyethylene resin composition may include the primary phenolic antioxidant in an amount of 50 ppm or more, 200 ppm or more, or 250 ppm or more, and 500 ppm or less, or 300 ppm or less, and the secondary phosphorus-based antioxidant in an amount of 50 ppm or more, 200 ppm or more, or 250 ppm or more, and 500 ppm or less, or 300 ppm or less, based on the total weight of the resin composition.

In addition, the stabilizer may be magnesium aluminum hydroxy carbonate (Hydrotalcite), aluminum magnesium zinc carbonate hydroxide, aluminum magnesium calcium carbonate hydroxide, or the like, and any one or a mixture of two or more of these may be used. Additionally, commercially available DHT-4A (manufactured by Kyowa Chemical Industries) may be used. The stabilizer may be added in an amount of 100 ppm or more, 200 ppm or more, or 300 ppm or more, and 1000 ppm or less, 700 ppm or less, or 500 ppm or less, based on the total weight of the mixture of first polyethylene and second polyethylene. Accordingly, the polyethylene resin composition may include the stabilizer in an amount of 100 ppm or more, 200 ppm or more, or 300 ppm or more, and 1000 ppm or less, 700 ppm or less, or 500 ppm or less, based on the total weight of the resin composition.

Further, the neutralizing agent may include calcium stearate (Ca-St), calcium palmitate, zinc stearate, zinc palmitate, etc., and any one thereof or a mixture of two or more thereof may be used. The neutralizing agent may be added

in an amount of 100 ppm or more, 300 ppm or more, or 500 ppm or more, and 1000 ppm or less, or 700 ppm or less, based on the total weight of the mixture of first polyethylene and second polyethylene. Therefore, the polyethylene resin composition may include the neutralizing agent in an amount of 100 ppm or more, 300 ppm or more, or 500 ppm or more, and 1000 ppm or less, or 700 ppm or less, based on the total weight of the resin composition.

Further, the melting and extrusion process may be performed according to common methods, for example, at an extrusion temperature of 180 °C to 220 °C, or 180 °C to 210 °C using an extruder such as a twin screw extruder.

The polyethylene resin composition satisfying the above-mentioned physical property requirements is prepared using the above-described preparation method.

The prepared polyethylene resin composition exhibits high mechanical strength and transparency along with excellent stretchability. Accordingly, there is no concern about defects such as breakage or shrinkage, etc. during stretching in the TD direction when manufacturing the biaxially stretched film. Further, the manufactured biaxial stretched film may exhibit excellent stretching ratio characteristics and tensile strength.

According to the present disclosure, provided are a composition for manufacturing a film including the above-described polyethylene resin composition, and a film, specifically, a stretched film which is manufactured using the above-described polyethylene resin composition.

The composition for manufacturing a film may be prepared in the same manner as a common method of preparing the composition for manufacturing a film, except that the above-described polyethylene resin composition is included.

In addition, the composition for manufacturing a film may further include, in addition to the above-described polyethylene resin composition, other polyethylene resin compositions having different compositions or physical properties from the polyethylene resin composition. In this case, other polyethylene resin compositions may be included in a state of being mixed with the polyethylene resin composition, and its content may be appropriately determined depending on the purpose and physical properties to be achieved. For example, other polyethylene resin compositions may be included in an amount of more than 0 wt% and 40 wt% or less, based on the total weight of the composition for manufacturing a film.

Further, the film may be specifically a stretched film, or a biaxially stretched film.

The film may be manufactured in the same manner as a common method of manufacturing a film or stretched film, except that the above-described polyethylene resin composition is included.

The film may exhibit excellent stretchability and strength properties by including the above-described polyethylene resin composition. Specifically, the film according to the present disclosure may have a stretching ratio of 4 to 7 times, or 5 to 6 times in the machine direction (MD) and a stretching ratio of 4 to 9 times, or 8 to 9 times in the transverse direction (TD).

Additionally, the film may satisfy the following conditions (e1) to (e3):

(e1) a tensile strength in MD direction is 100 MPa or more and a tensile strength in TD direction is 170 MPa or more, measured in accordance with ASTM D638 with a thickness of 2 mm

(e2) a 1% secant modulus in MD direction is 800 to 1400 MPa and a 1% secant modulus in TD direction is 1100 to 2300 MPa, measured in accordance with ASTM D882 with a thickness of 2 mm

(e3) a haze measured in accordance with the ISO 13468 standard when stretched at a stretching ratio of 5X8 (MD$\times$TD) or higher and having a thickness of 20 $\mu$m: 30% or less.

More specifically, the film may have a tensile strength in MD direction of 100 MPa or more, 105 MPa or more, 109 MPa or more, 112 MPa or more, or 114 MPa or more, when measured in accordance with ASTM D638 with a thickness of 2 mm. As the higher tensile strength is evaluated as the better, there is no specific upper limit. For example, the tensile strength in MD direction may be 200 MPa or less, 150 MPa or less, 130 MPa or less, 125 MPa or less, or 122 Mpa or less.

In addition, the film may have a tensile strength in TD direction of 170 MPa or more, 175 MPa or more, 178 MPa or more, 179 MPa or more, or 180 MPa or more, when measured in accordance with ASTM D638 with a thickness of 2 mm. As the higher tensile strength is evaluated as the better, there is no specific upper limit. For example, the tensile strength in TD direction may be 300 MPa or less, 200 MPa or less, 190 MPa or less, 185 MPa or less, or 182 Mpa or less.

In addition, the film may have a 1% secant modulus in MD direction of 800 MPa or more, 805 MPa or more, 175 MPa or more, 178 MPa or more, 179 MPa or more, or 180 MPa or more, when measured in accordance with ASTM D882 with a thickness of 2 mm. As the higher tensile strength is evaluated as the better, there is no specific upper limit. For example, the tensile strength in TD direction may be 300 MPa or less, 200 MPa or less, 190 MPa or less, 185 MPa or less, or 182 Mpa or less.

Further, the film may have a haze measured in accordance with the ISO 13468 standard of 30% or less, 15% or less, 10% or less, 8% or less, 5% or less, 4% or less, 3% or less, 2% or less, or 1% or less, when stretched at a stretching ratio of 5X8 (MD$\times$TD) or higher and having a thickness of 20 $\mu$m. As the lower haze is evaluated as the better, there is no specific lower limit. For example, the haze may be 0% or more, or 0.1% or more.

Hereinafter, preferred exemplary embodiments will be provided for better understanding of the present invention.

However, the following exemplary embodiments are provided only for understanding the present invention more easily, but the content of the present invention is not limited thereby.

**<Preparation of Catalyst>**

**Synthesis Example 1 (Ziegler-Natta catalyst for producing Polymer A)**

34 g of anhydrous magnesium chloride (99 wt% or more, a moisture content of less than 1%) was put in a 2 liter Buchi reactor dried with nitrogen, and 600 ml of purified hexane with a moisture content of less than 0.5 ppm was also put in the reactor. To the resulting reaction product, 175 ml of anhydrous 2-ethyl-1-hexanol was added under stirring, and then stirred at a temperature of 130 °C for about 2 hours to prepare a homogeneous solution of magnesium support.

While stirring the homogeneous solution at a temperature of 35 °C and a speed of 200 rpm, 200 ml of $TiCl_4$ was slowly added over 1 hour and stirred for another hour. In this process, a solid material was produced. After the solid material was precipitated, the liquid portion was removed, and the separated solid material was washed several times with hexane until the titanium concentration in the washing solution was 0.5 mmol or less. To the washed solid material, purified hexane was added to a total volume of 1 liter. The titanium concentration in the resulting hexane slurry was 30 mM. To the hexane slurry, 7 ml of cyclohexyl chloride was added at a temperature of 40 °C, and stirred for 1 hour to obtain a Ziegler-Natta catalyst supported on magnesium.

The prepared catalyst included $TiCl_4$ as a main catalyst, and also included cyclohexyl chloride at a molar ratio of 0.13, based on 1 mol of the main catalyst. In addition, a molar ratio of Mg:Ti in the catalyst was 4:1, and the average size of catalyst particles was 8 μm.

**Synthesis Example 2 (Metallocene catalyst for producing Polymer B)**

**Step 1: Preparation of catalyst precursor**

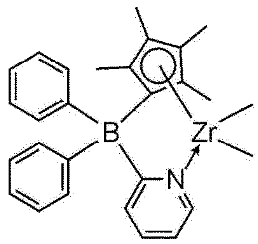

(1a)

2-Bromopyridine (1 eq.) was dissolved in tetrahydrofuran (0.1 M), and then *n*-butyllithium (1 eq.) was slowly added dropwise at -90 °C, followed by stirring at the same temperature for 1 hour. Then, chlorodiphenylborane (1 eq.) was dissolved in toluene (0.3 M), which was then slowly added dropwise to the first reaction product at - 78 °C, followed by stirring for 1 hour. Thereafter, stirring was performed at room temperature for 12 hours, and the solvent was dried under vacuum, and toluene was added, and a filtrate obtained by removing solids through a filter was dried under vacuum to obtain diphenyl(pyridin-2-yl)borane.

The diphenyl(pyridin-2-yl)borane (1 eq.) was dissolved in tetrahydrofuran (0.1 M), and then a solution of lithium tetramethylcyclopentadienide ($Li(CpMe_4)$, 1 eq.) dissolved in tetrahydrofuran (0.1 M) was slowly added dropwise at 0 °C, followed by stirring at room temperature overnight. The solvent was dried and removed under vacuum, and toluene/diethyl ether (a volume ratio of 3/1, 0.3 M) was introduced to dissolve, and $MCl_4$ (1 eq.) was mixed with toluene (0.2 M), which was then introduced at -78 °C, followed by stirring at room temperature overnight. When the reaction was completed, the solvent was dried and removed under vacuum, and dichloromethane was introduced and salts were removed through a filter. The filtrate was dried under vacuum, and then recrystallization was performed by adding dichloromethane/hexane. The resulting solids were filtered and dried under vacuum to obtain dichloro{diphenyl(pyridin-2-yl-κ*N*)($\eta^5$-2,3,4,5-tetramethylcyclopenta-2,4-dien-1-ylidene)borate}zirconium(IV).

Dichloro{diphenyl(pyridin-2-yl-κ*N*)($\eta^5$-2,3,4,5-tetramethylcyclopenta-2,4-dien-1-ylidene)borate}zirconium(IV) (1 eq.) was dissolved in toluene/diethyl ether (a volume ratio of 3/1, 0.3 M), and then a solution of methyl lithium (2 eq.) dissolved in hexane or diethyl ether was slowly added dropwise at -78 °C, followed by stirring at room temperature for 12 hours. When the reaction was completed, the solvent was dried and removed under vacuum, and dichloromethane was introduced and salts were removed through a filter. The filtrate was dried under vacuum, and then recrystallization was performed by adding dichloromethane/hexane. The resulting solids were filtered, and dried under vacuum to obtain a

precursor compound (1a).

$^1H$ NMR (500 MHz, $CDCl_3$, ppm): δ 8.32(d, 1H), 8.05(d, 4H), 7.70(t, 1H), 7.42(t, 1H), 7.40(t, 4H), 7.23(d, 1H), 7.17(t, 2H), 2.08(s, 6H), 1.93(s, 6H) 0.95(s, 6H)

**Step 2: Preparation of catalyst**

50 mL of toluene was added to a pico reactor, and then 7 g of silica gel (SYLOPOL 952X, calcinated under 250 °C) was added under Ar, and then methylaluminoxane(MAO) 8.5 mmol/g-$SiO_2$ was slowly injected at room temperature and allowed to react under stirring at 95 °C for 24 hours. After completing the reaction, the solution was cooled to room temperature, and left for 15 minutes, and the solvent was decanted using a cannula. Toluene (400 mL) was added, and stirred for 1 minute and left for 15 minutes, and then the solvent was decanted using a cannula.

60 μmol of the catalyst precursor compound (1a) prepared in step 1 was dissolved in 30 mL of toluene, and transferred to a reactor using a cannula, and allowed to react under stirring at 80 °C for 2 hours. When the reaction was completed and precipitation was completed, the solution was cooled to room temperature and left for 15 minutes, and the solvent was decanted using a cannula. The supernatant was removed, and the remaining reaction product was washed with toluene. After washing again with hexane, 2 wt% of N,N-bis(2-hydroxyethyl)pentadeylamine (Atmer 163) as an antistatic agent, based on the weight of silica (g), was dissolved in 3 mL of hexane, followed by stirring at room temperature for 10 minutes. When the reaction was completed and precipitation was completed, the supernatant was removed and the remaining product was transferred to a glass filter to remove the solvent.

Primary drying was performed at room temperature under vacuum for 5 hours, and secondary drying was performed at 45 °C under vacuum for 4 hours to obtain a silica supported metallocene catalyst in the form of solid particles.

**<Preparation of first polyethylene>**

**Preparation Example 1-1 (Preparation of polymer A1)**

A polyethylene was prepared by a polymerization reaction in the presence of a Ziegler-Natta catalyst system in a bimodal slurry process using two 100 L continuous stirred tank reactors (CSTR) and a post reactor.

In detail, a first polyethylene was prepared by adding a catalyst slurry in which 12.7 g of the Ziegler-Natta catalyst prepared in Synthesis Example 1 was dispersed per 1 L of hexane, 18 kg/hr of hexane, 5.5 kg/hr of ethylene, and 160 ml/hr (concentration 300 mM) of triethylaluminum (TEAL) into a first reactor, and then performing a primary polymerization reaction. At this time, the temperature, the pressure, and the residence time of the reactants in the first reactor were maintained at 80 °C, 6 bar, and 5.0 hours, respectively. While maintaining a constant liquid level in the reactor, the slurry mixture containing the polymer formed as a result of the polymerization reaction was continuously transferred to a second reactor connected in series with the first reactor.

When the slurry mixture containing the polymer prepared in the first reactor was transferred to the second reactor, 19 kg/hr of hexane, 4.5 kg/hr of ethylene, and 55 ml/hr (concentration 300 mM) of triethylaluminum (TEAL) were injected into the second reactor, followed by a secondary polymerization reaction to prepare a second polyethylene. At this time, the temperature, the pressure, and the residence time of the reactants in the second reactor were maintained at 75 °C, 2 bar, and 2.4 hours, respectively. While maintaining a constant liquid level in the reactor, the polymer mixture formed as a result of the polymerization reaction was continuously transferred to a post reactor connected in series with the second reactor.

The temperature in the post reactor was maintained at 78 °C. In the post reactor, unreacted monomers in the polymer mixture transferred from the second reactor were polymerized. The resulting polymerization product was subjected to solvent removal and drying processes, and an ethylene homopolymer (A1) was obtained as the first polyethylene.

**Preparation Example 1-2 (Preparation of polymer A2)**

An ethylene/1-butene copolymer (A2) was prepared as the first polyethylene in the same manner as in Preparation Example 1-1, except that 4 ml/min of 1-butene was additionally injected into the second reactor.

**Preparation Example 1-2 (Preparation of polymer A3)**

An ethylene/1-butene copolymer (A3) was prepared as the first polyethylene in the same manner as in Preparation Example 1-1, except that 7 g/hr of hydrogen was injected into the first reactor and 4 ml/min of 1-butene was additionally injected into the second reactor.

**<Preparation of second polyethylene>**

**Preparation Example 2-1 (Preparation of polymer B1)**

A second polyethylene was prepared by a polymerization reaction in the presence of a metallocene catalyst system using a single polymerization reactor and a post reactor.

In detail, 145 ml/hr of a catalyst slurry in which 6.5 g of the metallocene catalyst prepared in Synthesis Example 2 was dispersed per 1 L of hexane, 18 kg/hr of hexane, 10 kg/hr of ethylene, 0.1 g/hr of hydrogen, 0.6 kg/hr of 1-hexene, and 20 ml/hr (concentration 300 mM) of triethylaluminum (TEAL) were injected into a polymerization reactor, followed by a polymerization reaction. At this time, the temperature, the pressure, and the residence time of the reactants in the polymerization reactor were maintained at 70 °C, 7 bar, and 3.0 hours, respectively. When the polymerization reaction was completed, the prepared slurry containing the polymer was transferred to a post reactor.

The temperature in the post reactor was maintained at 70 °C. In the post reactor, unreacted monomers in the slurry containing the polymer prepared in the above polymerization reactor were polymerized. The resulting polymerization product was subjected to solvent removal and drying processes, and an ethylene/1-hexene copolymer (B1) was obtained as the second polyethylene.

**Preparation Example 2-2 (Preparation of polymer B2)**

An ethylene/ 1-octene copolymer (B2) was prepared as the second polyethylene in the same manner as in Preparation Example 2-2, except that 0.6 kg/hr of 1-octene instead of 1-hexene and 0.15 g/hr of hydrogen were injected into the polymerization reactor.

**Experimental Example 1**

Physical properties were evaluated for the first and second polyethylenes prepared in Preparation Examples by the following methods, and the results are shown in Table 1 below.

(1) Melt index ($MI_{2.16}$) [g/10min]

The melt index ($MI_{2.16}$) was measured at 190 °C under a load of 2.16 kg in accordance with the ASTM D1238 standard.

(2) MFRR ($MI_{21.6}/MI_{2.16}$)

The melt index ($MI_{21.6}$) was measured at 190 °C under a load of 21.6 kg in accordance with the ASTM D1238, and MFRR ($MI_{21.6}/MI_{2.16}$) was obtained by dividing $MI_{21.6}$ (190 °C, 21.6 kg load) by $MI_{2.16}$ (190 °C, 2.16 kg load) measured above.

(3) Density [g/cm$^3$]

The density was measured in accordance with the ASTM D792 standard.

(4) Weight average molecular weight (Mw) and molecular weight distribution (Mw/Mn)

A gel permeation chromatography (GPC) analysis was performed on the polyethylene prepared in Preparation Examples to determine a weight average molecular weight (Mw), and a number average molecular weight (Mn), respectively, and the weight average molecular weight determined above was divided by the number average molecular weight to obtain a molecular weight distribution (Mw/Mn).

In detail, a Polymer Laboratories PLgel MIX-B 300 mm length column was used, and PL-GPC220 manufactured by Waters was used as the gel permeation chromatography (GPC) instrument. At this time, the evaluation temperature was 160 °C, and 1,2,4-trichlorobenzene was used as a solvent and a flow rate was 1 mL/min. The polyethylene sample was pretreated by dissolving in 1,2,4-trichlorobenzene containing 0.025% of BHT at 160 °C for 4 hours using a GPC analyzer (PL-GP220), and prepared at a concentration of 20 mg/10 mL, and then fed in an amount of 200 μL. Mw and Mn were obtained using a calibration curve formed using polystyrene standard specimens. 9 kinds of the polystyrene standard specimens having a weight average molecular weight (g/mol) of 2,000 / 10,000 / 30,000 / 70,000 / 200,000 / 700,000 / 2,000,000 / 4,000,000 / 10,000,000 were used.

[Table 1]

| | Resin type | Catalyst type | Polymerization process | Comonomer type | $MI_{2.16}$ [g/10min] | **MFRR** ($MI_{21.6}$/ $MI_{2.16}$) | Density [g/cm$^3$] | Mw [g/mol] | Mw/Mn |
|---|---|---|---|---|---|---|---|---|---|
| Preparation Example 1-1 | A1 | Synthesis Example 1 (Ziegler-Natta) | Bimodal | - | 0.80 | 82.60 | 0.958 | 154k | 15.20 |
| Preparation Example 1-2 | A2 | Synthesis Example 1 (Ziegler-Natta) | Bimodal | 1-butene | 1.00 | 84.60 | 0.955 | 142k | 14.10 |
| Preparation Example 1-3 | A3 | Synthesis Example 1 (Ziegler-Natta) | Bimodal | 1-butene | 1.50 | 80.10 | 0.952 | 143k | 14.15 |
| Preparation Example 2-1 | B1 | Synthesis Example 2 (Metallocene) | Unimodal | 1-hexene | 1.00 | 16.00 | 0.918 | 118k | 2.40 |
| Preparation Example 2-2 | B2 | Synthesis Example 2 (Metallocene) | Unimodal | 1-octene | 3.00 | 18.00 | 0.910 | 76k | 2.50 |

In Table 1 above, k represents 'x$10^3$'.

**<Preparation of polyethylene resin composition>**

**Examples 1 to 18, and Comparative Examples 1 to 17**

A polyethylene resin composition was prepared by mixing the first and second polyethylenes prepared in the above Preparation Examples at various weight ratios.

Specifically, after mixing the first and second polyethylenes at the weight ratio shown in Table 2 or Table 3 below, 300 ppm of DHT-4A (Magnesium aluminum hydroxycarbonate) manufactured by Kyowa Chemical Industries as a stabilizer, 300 ppm of Irganox 1010 manufactured by BASF as a first antioxidant, and 300 ppm of Irgafos 168 manufactured by BASF as a second antioxidant based on the total weight of the resulting mixture were added and mixed. Then, extrusion was performed at an extrusion temperature of 190 °C using a twin screw extruder (TEK 30 MHS, manufactured by SMPLATECH CO., diameter of 32 pi, L/D = 40) to prepare a pellet-type polyethylene resin composition.

**Comparative Examples 18 to 22**

A polyethylene resin composition was prepared by mixing the first and second polyethylenes under the following conditions in the same manner as in Example 1, except that they were mixed at the weight ratio shown in Table 3.

<First polyethylene>

A4: Polyethylene with $MI_{2.16}$=50 g/10min and density=0.965 g/cm$^3$
A5: Polyethylene with $MI_{2.16}$=5.1 g/10min and density=0.961 g/cm$^3$

<Second polyethylene>

B3: Polyethylene with $MI_{2.16}$=0.4 g/10min and density=0.940 g/cm$^3$
B4: Polyethylene with $MI_{2.16}$=3.5 g/10min and density=0.904 g/cm$^3$
B5: Polyethylene with $MI_{2.16}$=1.0 g/10min and density=0.905 g/cm$^3$
B6: Polyethylene with $MI_{21.6}$=3.5 g/10min and density=0.940 g/cm$^3$ (TL2000, manufactured by LG Chem)

**Comparative Example 23**

LUTENE-H PE0235 manufactured by LG Chem was used as the polyethylene resin composition.

**Comparative Example 24**

LUTENE-H ME5500 manufactured by LG Chem was used as the polyethylene resin composition.

[Table 2]

| Example No. | First polyethylene | | | Second polyethylene | |
|---|---|---|---|---|---|
| | A1 | A2 | A3 | B1 | B2 |
| 1 | 90 | - | - | 10 | - |
| 2 | 80 | - | - | 20 | - |
| 3 | 70 | - | - | 30 | - |
| 4 | 90 | - | - | - | 10 |
| 5 | 83 | - | - | - | 17 |
| 6 | 77 | - | - | - | 23 |
| 7 | - | 90 | - | 10 | - |
| 8 | - | 80 | - | 20 | - |
| 9 | - | 70 | - | 30 | - |
| 10 | - | 90 | - | - | 10 |
| 11 | - | 83 | - | - | 17 |
| 12 | - | 70 | - | - | 30 |
| 13 | - | - | 90 | 10 | - |
| 14 | - | - | 80 | 20 | - |
| 15 | - | - | 70 | 30 | - |
| 16 | - | - | 90 | - | 10 |
| 17 | - | - | 80 | - | 20 |
| 18 | - | - | 70 | - | 30 |

[Table 3]

| Compara tive Example No. | First polyethylene | | | | | Second polyethylene | | | | | |
|---|---|---|---|---|---|---|---|---|---|---|---|
| | A1 | A2 | A3 | A4 | A5 | B1 | B2 | B3 | B4 | B5 | B6 |
| 1 | 100 | - | - | - | - | - | - | - | - | - | - |
| 2 | - | 100 | - | - | - | - | - | - | - | - | - |
| 3 | - | - | 100 | - | - | - | - | - | - | - | - |
| 4 | - | - | - | - | - | 100 | - | - | - | - | - |
| 5 | - | - | - | - | - | - | 100 | - | - | - | - |
| 6 | 95 | - | - | - | - | 5 | - | - | - | - | - |
| 7 | 65 | - | - | - | - | 35 | - | - | - | - | - |

(continued)

| Compara tive Example No. | First polyethylene | | | | | Second polyethylene | | | | | |
|---|---|---|---|---|---|---|---|---|---|---|---|
| | A1 | A2 | A3 | A4 | A5 | B1 | B2 | B3 | B4 | B5 | B6 |
| 8 | 95 | - | - | - | - | - | 5 | - | - | - | - |
| 9 | 65 | - | - | - | - | - | 35 | - | - | - | - |
| 10 | - | 95 | - | - | - | 5 | - | - | - | - | - |
| 11 | - | 65 | - | - | - | 35 | - | - | - | - | - |
| 12 | - | 95 | - | - | - | - | 5 | - | - | - | - |
| 13 | - | 65 | - | - | - | - | 35 | - | - | - | - |
| 14 | - | - | 95 | - | - | 5 | - | - | - | - | - |
| 15 | - | - | 65 | - | - | 35 | - | - | - | - | - |
| 16 | - | - | 95 | - | - | - | 5 | - | - | - | - |
| 17 | - | - | 65 | - | - | - | 35 | - | - | - | - |
| 18 | - | - | - | 80 | - | - | - | 20 | - | - | - |
| 19 | - | - | - | 50 | - | - | - | 50 | - | - | - |
| 20 | - | - | - | - | 90 | - | - | - | 10 | - | - |
| 21 | - | - | - | - | 90 | - | - | - | - | 10 | - |
| 22 | - | - | - | 60 | - | - | - | - | - | - | 40 |

**Experiment Example 2**

A temperature rising elution fractionation (TREF) analysis was performed on the polyethylene resin compositions of Examples and Comparative Examples in the following manner, and the content ratio of the polymer fraction eluted in each temperature section was obtained.

In detail, 30 mg of the polyethylene resin composition sample was introduced into the TREF device (manufactured by PolymerChar), and then dissolved in 20 mL of trichlorobenzene at 150 °C for 60 minutes, followed by stabilization at 140 °C for 20 minutes. Thereafter, it was cooled to 35 °C at a cooling rate of 0.5 °C/min, and maintained for 10 minutes. Then, the solvent trichlorobenzene was applied to the column at a flow rate of 0.5 mL/min while heating from 35 °C to 140 °C at a heating rate of 1 °C/min, and then the concentration of the eluted polymer was measured. Other measurement conditions are as follows. From the measurement results, a TREF analysis curve having the elution temperature (Te) (°C) on the x-axis and the elution amount (dw/dt) on the y-axis was derived.

<TREF measurement conditions>

Dissolution Rate: 40 °C /min
Stabilization Rate: 40 °C /min
Crystallization Rate: 0.5 °C /min
Elution Rate: 1 °C /min
Cleaning rate: 30 °C /min
Dissolution temperature: 150 °C
Stabilization temperature: 140 °C
Crystallization temperature: 35 °C
Elution init temp: 35 °C
Elution temperature: 140 °C
Post elution temperature: 150 °C
Cleaning temperature: 150 °C
Dissolution time: 60 min
Stabilization time: 20 min

Crystallization time: 10 min
Pre-injection time: 10 min
Soluble Fraction time: 10 min
post elution time: 10 min
Cleaning time: 10 min
Cleaning cycles: 1

The content ratio of the fractions eluted in each elution temperature range was calculated based on the total weight of all eluted fractions obtained through TREF analysis as a percentage (wt%). The results were shown in Tables 4 and 5 below.

In addition, the results of temperature rising elution fractionation (TREF) analysis for the polyethylene resin compositions of Examples 5 and 6 and Comparative Examples 10 and 14 were shown in FIG. 1.

[Table 4]

| Example No. | 25-90 °C | 40-70 °C | 90-120 °C | 100-105 °C |
|---|---|---|---|---|
| 1 | 25.3 | 2.7 | 74.7 | 44.2 |
| 2 | 30.8 | 8.7 | 69.2 | 40.9 |
| 3 | 36.2 | 14.7 | 63.8 | 37.5 |
| 4 | 26.4 | 3.9 | 73.6 | 43.5 |
| 5 | 31.0 | 8.9 | 69.0 | 40.7 |
| 6 | 34.9 | 13.2 | 65.1 | 38.3 |
| 7 | 29.0 | 6.8 | 71.0 | 41.9 |
| 8 | 34.1 | 12.3 | 65.9 | 38.9 |
| 9 | 39.1 | 17.8 | 60.9 | 35.8 |
| 10 | 30.0 | 7.9 | 70.0 | 41.3 |
| 11 | 34.4 | 12.7 | 65.6 | 38.7 |
| 12 | 42.4 | 21.4 | 57.6 | 33.8 |
| 13 | 32.7 | 10.8 | 67.3 | 39.7 |
| 14 | 37.3 | 15.9 | 62.7 | 36.9 |
| 15 | 42.3 | 21.0 | 57.7 | 34.0 |
| 16 | 32.0 | 10.1 | 68.0 | 40.1 |
| 17 | 39.5 | 18.3 | 60.5 | 35.5 |
| 18 | 45.2 | 24.6 | 54.8 | 32.0 |

[Table 5]

| Comparative Example No. | 25-90 °C | 40-70 °C | 90-120 °C | 100-105 °C |
|---|---|---|---|---|
| 1 | 19.8 | 0.3 | 80.2 | 47.5 |
| 2 | 23.9 | 1.2 | 76.1 | 45.0 |
| 3 | 28.0 | 5.7 | 72.0 | 42.5 |
| 4 | 74.4 | 56.6 | 25.6 | 14.2 |
| 5 | 85.4 | 68.5 | 14.6 | 7.5 |
| 6 | 22.6 | 0.3 | 77.4 | 45.9 |
| 7 | 39.0 | 17.7 | 61.0 | 35.9 |
| 8 | 23.0 | 0.3 | 77.0 | 45.5 |
| 9 | 42.8 | 21.9 | 57.2 | 33.5 |

(continued)

| Comparative Example No. | 25-90 °C | 40-70 °C | 90-120 °C | 100-105 °C |
|---|---|---|---|---|
| 10 | 26.5 | 4.0 | 73.5 | 43.5 |
| 11 | 41.6 | 20.6 | 58.4 | 34.2 |
| 12 | 27.0 | 4.6 | 73.0 | 43.2 |
| 13 | 45.4 | 24.8 | 54.6 | 31.9 |
| 14 | 30.4 | 8.2 | 69.6 | 41.1 |
| 15 | 44.3 | 23.5 | 55.7 | 32.6 |
| 16 | 30.9 | 8.8 | 69.1 | 40.8 |
| 17 | 48.1 | 27.7 | 51.9 | 30.3 |
| 18 | 17.1 | 0.1 | 82.9 | 49.2 |
| 19 | 27.3 | 5.0 | 72.7 | 42.9 |
| 20 | 23.5 | 0.8 | 76.5 | 45.3 |
| 21 | 23.4 | 0.6 | 76.6 | 45.4 |
| 22 | 18.9 | 0.1 | 81.1 | 48.0 |
| 23 | 29.4 | 7.2 | 70.6 | 41.7 |
| 24 | 28.0 | 5.7 | 72.0 | 42.5 |

In Tables 4 and 5 above, the temperature range "-" includes both the lower and upper limits of the numerical range. For example, 25-90 °C means a range of 25 °C or higher and 90°C or lower.

**Experimental Example 3**

Physical properties were evaluated for the polyethylene resin compositions prepared in Examples and Comparative Examples by the following methods, and the results were shown in Tables 6 and 7 below.

(1) Density: The density was measured at 23 °C in accordance with the ASTM D792 standard.

(2) Melt index ($MI_{2.16}$): The melt index ($MI_{2.16}$) was measured at 190 °C under a load of 2.16 kg in accordance with the ASTM D1238 standard.

(3) MFRR ($MI_{21.6}/MI_{2.16}$)
The melt index ($MI_{21.6}$) was measured at 190 °C under a load of 21.6 kg in accordance with the ASTM D1238, and MFRR ($MI_{21.6}/MI_{2.16}$) was obtained by dividing $MI_{21.6}$ (190 °C, 21.6 kg load) by $MI_{2.16}$ (190 °C, 2.16 kg load) measured above.

(4) Weight average molecular weight (Mw) and molecular weight distribution (Mw/Mn)

A gel permeation chromatography (GPC) analysis was performed on the polyethylene resin compositions prepared in Examples and Comparative Examples to determine a weight average molecular weight (Mw), and a number average molecular weight (Mn), respectively, and the weight average molecular weight determined above was divided by the number average molecular weight to obtain a molecular weight distribution (Mw/Mn).

In detail, a Polymer Laboratories PLgel MIX-B 300 mm length column was used, and PL-GPC220 manufactured by Waters was used as the gel permeation chromatography (GPC) instrument. At this time, the evaluation temperature was 160 °C, and 1,2,4-trichlorobenzene was used as a solvent and a flow rate was 1 mL/min. The polyethylene resin composition sample was pretreated by dissolving in 1,2,4-trichlorobenzene containing 0.025% of BHT at 160 °C for 4 hours using a GPC analyzer (PL-GP220), and prepared at a concentration of 20 mg/10 mL, and then fed in an amount of 200 μL. Mw and Mn were obtained using a calibration curve formed using polystyrene standard specimens. 9 kinds of the polystyrene standard specimens having a weight average molecular weight (g/mol) of 2,000 / 10,000 / 30,000 / 70,000 / 200,000 / 700,000 / 2,000,000 / 4,000,000 / 10,000,000 were used.

Further, through the GPC analysis, a molecular weight distribution curve having a log value (log Mw) of a weight

average molecular weight (Mw; g/mol) on the x-axis, and a molecular weight distribution (dwt/dlogMw) with respect to the log value on the y-axis was plotted, and the shape of the molecular weight distribution curve was identified.

(5) Relaxation time (λ; seconds) and shear thinning index

The relaxation time (λ; seconds) and shear thinning index of the polyethylene were determined by measuring the viscosity of the polyethylene resin composition under the conditions of 0.5% strain at a temperature of 190 °C and an angular frequency of 0.01 Hz to 100 Hz using a rotational rheometer, followed by calculation using the Carreau-Yasuda Model of Equation 1 below.

Specifically, samples were prepared by compression molding the polyethylene resin compositions of Examples and Comparative Examples at 190 °C under a nitrogen atmosphere using a 25 mm diameter plate (a gap between plates: 1.2 mm). Then, the samples were subjected to an oscillatory shear experiment by continuously applying strain (0.5%) within the linear viscosity range at a temperature of 190 °C and an angular frequency of 0.01 Hz to 100 Hz (equivalent to 0.0628 rad/s to 628 rad/s) using DHR-2 manufactured by TA-Instrument. Five measurement points per 10 units were obtained.

The viscosity was measured by the oscillatory shear experiment, and a log-log graph with the angular frequency (Hz) on the x-axis and the viscosity η (Pa·s) of the polyethylene resin composition measured above on the y-axis was obtained. Thereafter, the log-log graph was fit to the Carreau-Yasuda Model represented by the following Equation 1 to determine the relaxation time (λ; seconds) and shear thinning index along with the zero-shear viscosity ($\eta_0$; Pa·s) and parameter a. In this Experimental Example, the zero-shear viscosity (η0), parameter a, relaxation time (λ), and shear thinning index were respectively calculated using the TRIOS program from TA Instruments.

[Equation 1]

$$\eta(\dot{\gamma}) = \eta_0[1 + (\lambda\dot{\gamma})^a]^{\frac{n-1}{a}}$$

in Equation 1,

the η is a viscosity (Pa·s) of the polyethylene resin composition measured above, and
the $\eta_0$ is a zero-shear viscosity (Pa·s), which is the viscosity in the region where the viscosity does not change as the angular frequency approaches zero. In the present disclosure, the zero-shear viscosity was determined by fitting a log-log graph with the angular frequency (unit: Hz) on the x-axis and the viscosity η (unit: Pa·s) of the polyethylene resin composition measured above on the y-axis to the Carreau-Yasuda Model represented by the Equation 1.

Additionally, the $\dot{\gamma}$ represents a shear rate applied to the polyethylene resin composition, which is the same value as the angular frequency converted to rad/s according to the Cox-Merz Rule.

The λ is a relaxation time (seconds) of the polyethylene resin composition, and was determined by fitting a log-log graph with the angular frequency (Hz) on the x-axis and the viscosity η (Pa·s) of the polyethylene resin composition measured above on the y-axis to the Carreau-Yasuda Model represented by the Equation 1.

Further, the n is a shear thinning index, and was determined by fitting a log-log graph with the angular frequency (Hz) on the x-axis and the viscosity η (Pa·s) of the polyethylene resin composition measured above on the y-axis to the Carreau-Yasuda Model represented by the Equation 1.

The a is a shape parameter that transitions from Newtonian plateau to power law region, and was determined by fitting a log-log graph with the angular frequency (Hz) on the x-axis and the viscosity η (Pa·s) of the polyethylene resin composition measured above on the y-axis to the Carreau-Yasuda Model represented by the Equation 1.

[Table 6]

| Exampl e No. | $MI_{2.16}$ [g/10min] | MFRR ($MI_{21.6}/MI_{2.16}$) | Density [g/cm³] | Mw [g/mol] | Mw/Mn | Relaxatio n Time [sec] | Shear Thinning Index |
|---|---|---|---|---|---|---|---|
| 1 | 0.87 | 74.94 | 0.954 | 150,400 | 13.63 | 0.17 | 0.22 |
| 2 | 0.94 | 68.28 | 0.950 | 146,800 | 12.41 | 0.20 | 0.26 |
| 3 | 1.01 | 61.62 | 0.946 | 143,200 | 11.20 | 0.35 | 0.30 |
| 4 | 1.02 | 75.14 | 0.953 | 146,200 | 13.66 | 0.17 | 0.23 |

(continued)

| Exampl e No. | $MI_{2.16}$ [g/10min] | MFRR ($MI_{21.6}/MI_{2.16}$) | Density [g/cm$^3$] | Mw [g/mol] | Mw/Mn | Relaxatio n Time [sec] | Shear Thinning Index |
|---|---|---|---|---|---|---|---|
| 5 | 1.17 | 70.62 | 0.950 | 140,740 | 12.84 | 0.20 | 0.26 |
| 6 | 1.31 | 66.74 | 0.947 | 136,060 | 12.13 | 0.30 | 0.29 |
| 7 | 1.00 | 76.74 | 0.951 | 139,600 | 13.95 | 0.17 | 0.25 |
| 8 | 1.00 | 69.88 | 0.948 | 137,200 | 12.71 | 0.27 | 0.28 |
| 9 | 1.00 | 63.02 | 0.944 | 134,800 | 11.46 | 0.48 | 0.32 |
| 10 | 1.20 | 76.94 | 0.951 | 135,400 | 13.99 | 0.19 | 0.26 |
| 11 | 1.34 | 72.28 | 0.947 | 130,780 | 13.14 | 0.29 | 0.29 |
| 12 | 1.60 | 63.62 | 0.942 | 122,200 | 11.57 | 0.68 | 0.34 |
| 13 | 1.45 | 72.69 | 0.949 | 140,500 | 13.22 | 0.24 | 0.27 |
| 14 | 1.40 | 66.28 | 0.945 | 138,000 | 12.05 | 0.40 | 0.31 |
| 15 | 1.35 | 60.57 | 0.942 | 135,500 | 10.89 | 0.65 | 0.34 |
| 16 | 1.61 | 74.75 | 0.949 | 138,310 | 13.59 | 0.22 | 0.27 |
| 17 | 1.80 | 66.68 | 0.944 | 129,600 | 12.12 | 0.51 | 0.32 |
| 18 | 1.95 | 60.47 | 0.940 | 122,900 | 10.99 | 0.89 | 0.36 |

[Table 7]

| Compar ative Exampl e No. | $MI_{2.16}$ [g/10min] | MFRR ($MI_{21.6}/MI_{2.16}$) | Density [g/cm$^3$] | Mw [g/mol] | Mw/M n | Relaxation Time (sec) | Shear Thinning Index |
|---|---|---|---|---|---|---|---|
| 1 | 0.80 | 82.60 | 0.958 | 154,000 | 15.20 | 0.28 | 0.19 |
| 2 | 1.00 | 84.60 | 0.955 | 142,000 | 14.10 | 0.19 | 0.21 |
| 3 | 1.50 | 80.10 | 0.952 | 143,000 | 14.15 | 0.17 | 0.24 |
| 4 | 1.00 | 16.00 | 0.918 | 118,000 | 2.40 | 5.06 | 0.56 |
| 5 | 3.00 | 18.00 | 0.910 | 76,000 | 2.50 | 7.58 | 0.64 |
| 6 | 0.81 | 78.27 | 0.956 | 152,200 | 14.23 | 0.21 | 0.21 |
| 7 | 0.87 | 58.29 | 0.944 | 141,400 | 10.60 | 0.48 | 0.32 |
| 8 | 0.91 | 78.37 | 0.956 | 150,100 | 14.25 | 0.20 | 0.21 |
| 9 | 1.57 | 58.99 | 0.941 | 126,700 | 10.73 | 0.71 | 0.34 |
| 10 | 1.00 | 80.17 | 0.953 | 140,800 | 14.58 | 0.17 | 0.23 |
| 11 | 1.00 | 59.59 | 0.942 | 133,600 | 10.83 | 0.63 | 0.34 |
| 12 | 1.10 | 80.27 | 0.953 | 138,700 | 14.59 | 0.17 | 0.24 |
| 13 | 1.70 | 60.29 | 0.939 | 118,900 | 10.96 | 0.91 | 0.36 |
| 14 | 1.48 | 75.90 | 0.950 | 141,750 | 14.20 | 0.19 | 0.26 |
| 15 | 1.33 | 56.67 | 0.940 | 134,250 | 10.30 | 0.82 | 0.35 |
| 16 | 1.58 | 76.00 | 0.950 | 139,650 | 14.22 | 0.20 | 0.26 |
| 17 | 2.03 | 57.37 | 0.937 | 119,550 | 10.43 | 1.14 | 0.38 |
| 18 | 40.08 | 100.2 | 0.960 | N/A | 20.4 | N/A | N/A |
| 19 | 25.20 | 90.6 | 0.953 | N/A | 17.7 | N/A | N/A |
| 20 | 4.94 | 85.4 | 0.955 | N/A | 15.6 | N/A | N/A |

(continued)

| Comparative Example No. | $MI_{2.16}$ [g/10min] | MFRR ($MI_{21.6}/MI_{2.16}$) | Density [g/cm$^3$] | Mw [g/mol] | Mw/M n | Relaxation Time (sec) | Shear Thinning Index |
|---|---|---|---|---|---|---|---|
| 21 | 4.69 | 87.6 | 0.955 | N/A | 16.2 | N/A | N/A |
| 22 | 30.00 | 102.9 | 0.955 | N/A | 20.8 | N/A | N/A |
| 23 | 0.25 | 60.1 | 0.951 | N/A | 11.2 | N/A | N/A |
| 24 | 3.1 | 60.3 | 0.952 | N/A | 10.9 | N/A | N/A |

In the above table, N/A indicates that the measurement was not conducted.

**Experiment Example 4**

Stretchability and film properties when manufacturing stretched films using the polyethylene resin compositions prepared in Examples and Comparative Examples were evaluated in the following manner.

(1) Preparation of cast films and biaxially stretched films

A cast sheet of the polyethylene resin compositions prepared in Examples and Comparative Examples was produced at a thickness of 0.72 mm using Bruckner's lab extruder line (L/D ratio: 42, Screw diameter: 25 mm, Melt/T-Die temperature: 250 °C).

Biaxial stretching was performed on the cast sheet prepared above to produce a polyethylene film with a width x a height of 90 mm x 90 mm using Lab Stretcher KARO 5.0 machine manufactured by Bruckner. At this time, stretching (MD → TD) was sequentially performed after preheating for 60 seconds at 110-130 °C, respectively, and the stretching was performed at 300%/s.

The final film thickness was 20 μm with a stretching ratio of 5X8 times.

However, the polyethylene resin compositions of Comparative Examples 1, 6, 8, and 19 could not be stretched, so biaxially stretched films could not be produced.

<Stretched film manufacturing conditions>

Sample size: 90 mm x 90 mm
Stretch profile: sequential
Stretch ratio: 5 x 8
Stretch speed: 100-400 %/s
Stretch temp: 110-130 °C
Preheat: 60 s

(2) Maximum stretching ratio

For the cast film manufactured in (1), the maximum stretching ratio in MD x TD that can be stretched without breaking or defecting the film during biaxial stretching was measured using Lab Stretcher KARO 5.0 machine manufactured by Bruckner.

<Measurement conditions>

Sample size: 90 mm x 90 mm
Stretch profile: sequential
Stretch ratio: 5 to 6 times in MD, 4 to 9 times in TD
Stretch speed: 100 to 400 %/s
Stretch temp.: 110 to 130 °C

Preheat temp.: 100 s.

(3) Toughness

The toughness was measured in accordance with the ASTM D638 standard.

Specifically, the polyethylene resin compositions of Examples and Comparative Examples were hot-pressed at 190 °C to form sheets with a thickness of 2 mm, which were then cut into PE specimens according to the ASTM D638 standard. The PE specimens prepared in this manner were horizontally fixed to a Zwick tensile testing machine (UTM), and a tensile test was conducted at room temperature (23±5 °C) by pulling the upper PE sheet in either MD or TD. The tensile strength measured at a pulling speed of 50 mm/min was expressed as toughness in [MPa]. A tensile strength of 100 MPa or more in MD and 170 MPa or more in TD is considered excellent.

(4) Stiffness

The stiffness was measured in accordance with the ASTM D 882 standard.

Specifically, the polyethylene resin compositions of Examples and Comparative Examples were hot-pressed at 190 °C to form sheets with a thickness of 2 mm, which were then cut into PE specimens according to the ASTM D 882 standard. The PE specimens prepared in this manner were horizontally fixed to a Zwick tensile testing machine (UTM), and a tensile test was conducted at room temperature (23±5 °C) by pulling the upper PE sheet. The 1% secant modulus (also known as Modulus of Elasticity) measured at a pulling speed of 5 mm/min was expressed as stiffness in [MPa]. A 1% secant modulus or stiffness of 800 MPa or more in MD and TD is considered excellent.

(5) Transparency

The haze [%] of the biaxially stretched film manufactured in (1) was measured according to the ISO 13468 standard. A lower haze value indicates better transparency, and generally, a haze value of 30% or less is considered excellent.

[Table 8]

| | Maximum stretching ratio | Toughness | | Stiffness | | Transpar ency |
|---|---|---|---|---|---|---|
| Examp le No. | MD x TD | MD Tensile Strength [MPa] | TD Tensile Strength [MPa] | MD Modulus of Elasticity [MPa] | TD Modulus of Elasticity [MPa] | HAZE [%] |
| 1 | 5x8 | 109 | 178 | 1389 | 2223 | 26 |
| 2 | 6x9 | 113 | 179 | 1229 | 1933 | 13 |
| 3 | 6x9 | 117 | 180 | 1069 | 1644 | 1 |
| 4 | 6x8 | 110 | 178 | 1357 | 2165 | 24 |
| 5 | 6x9 | 113 | 179 | 1222.6 | 1922 | 12 |
| 6 | 6x9 | 116 | 180 | 1107.4 | 1713 | 3 |
| 7 | 6x8 | 112 | 179 | 1281 | 2027 | 17 |
| 8 | 6x9 | 115 | 180 | 1133 | 1760 | 5 |
| 9 | 6x9 | 119 | 181 | 985 | 1492 | 1 |
| 10 | 6x8 | 113 | 179 | 1249 | 1970 | 15 |
| 11 | 6x9 | 116 | 180 | 1123 | 1742 | 4 |
| 12 | 6x9 | 122 | 182 | 889 | 1319 | 1 |
| 13 | 6x9 | 114 | 179 | 1173 | 1832 | 8 |
| 14 | 6x9 | 118 | 181 | 1037 | 1586 | 1 |
| 15 | 6x9 | 121 | 182 | 901 | 1340 | 1 |
| 16 | 6x9 | 114 | 179 | 1191 | 1865 | 10 |

(continued)

| | Maximum stretching ratio | Toughness | | Stiffness | | Transparency |
|---|---|---|---|---|---|---|
| Example No. | MD x TD | MD Tensile Strength [MPa] | TD Tensile Strength [MPa] | MD Modulus of Elasticity [MPa] | TD Modulus of Elasticity [MPa] | HAZE [%] |
| 17 | 6x9 | 119 | 181 | 973 | 1470 | 1 |
| 18 | 6x9 | 124 | 183 | 805 | 1167 | 1 |

[Table 9]

| | Maximum stretching ratio | Toughness | | Stiffness | | Transparency |
|---|---|---|---|---|---|---|
| Comparative Example No. | MD x TD | MD Tensile Strength [MPa] | TD Tensile Strength [MPa] | MD Modulus of Elasticity [MPa] | TD Modulus of Elasticity [MPa] | HAZE [%] |
| 1 | N/A | N/A | N/A | N/A | N/A | N/A |
| 2 | 5x7 | 88 | 157 | 1429 | 2295 | 50 |
| 3 | 5x8 | 91 | 158 | 1309 | 2078 | 40 |
| 4 | 6x9 | 125 | 170 | 151 | 202 | 1 |
| 5 | 6x9 | 133 | 172 | 150 | 200 | 1 |
| 6 | N/A | N/A | N/A | N/A | N/A | N/A |
| 7 | 6x9 | 99 | 161 | 156 | 207 | 17 |
| 8 | N/A | N/A | N/A | N/A | N/A | N/A |
| 9 | 6x9 | 102 | 162 | 155 | 207 | 8 |
| 10 | 5x8 | 90 | 158 | 1355 | 2161 | 47 |
| 11 | 6x9 | 101 | 162 | 155 | 207 | 10 |
| 12 | 5x8 | 90 | 158 | 1339 | 2132 | 46 |
| 13 | 6x9 | 104 | 163 | 155 | 206 | 1 |
| 14 | 6x8 | 93 | 159 | 1241 | 1955 | 40 |
| 15 | 6x9 | 103 | 162 | 155 | 207 | 4 |
| 16 | 6x8 | 93 | 159 | 1225 | 1926 | 37 |
| 17 | 6x9 | 106 | 163 | 155 | 206 | 1 |
| 18 | N/A | N/A | N/A | N/A | N/A | N/A |
| 19 | 5x7 | 85 | 159 | 1439 | 2295 | 44 |
| 20 | 5x7 | 87 | 157 | 1428 | 2281 | 49 |
| 21 | 5x7 | 85 | 156 | 1431 | 2276 | 49 |
| 22 | 5x7 | 76 | 144 | 1457 | 2341 | 51 |
| 23 | 5x7 | 110 | 179 | 1241 | 1987 | 15 |
| 24 | 5x7 | 109 | 177 | 1258 | 2015 | 18 |

In the above table, N/A indicates that the measurement was not conducted.

When the stretched films were manufactured using the polyethylene resin compositions of Examples, it was confirmed that the films exhibited excellent stretching ratio characteristics, as well as improved mechanical properties and

transparency.

On the other hand, as the polyethylene resin compositions of Comparative Examples 1, 6, 8, and 18 had a high density, stretching was impossible and a stretched film could not be produced.

Additionally, in the case of Comparative Examples 4 and 5 which only included low-density polyethylene, the films showed excellent transparency due to the low-density characteristics of the resin compositions. However, TREF analysis revealed the high content of fractions eluted in the low-temperature region and the low content of fractions eluted in the high-temperature region, leading to a significant reduction in stiffness in MD and TD.

Meanwhile, in the case of Comparative Examples 14 and 16 which included a mixture of low-density polyethylene and high-density polyethylene, but had a high content of the high-density first polyethylene and a low content of the low-density second polyethylene, the toughness and transparency characteristics were greatly reduced due to the excessively wide molecular weight distribution. In the case of Comparative Examples 7, 9, 11, 13, 15, and 17 which had a low content of the high-density first polyethylene and a high content of the low-density polyethylene, although the transparency was excellent, the tensile strength in TD and stiffness were greatly reduced during film production due to the low MFRR or low density.

Additionally, in the case of Comparative Examples 2, 3, 10, and 12 having a broad molecular weight distribution and high MFRR**,** the stretch properties, toughness in MD and TD, and transparency were reduced. Among these, the decline in transparency was particularly significant.

In the case of Comparative Examples 19 to 21, the high MI and MFRR made it difficult to manufacture cast sheets, and stretchability during film production was inferior. Furthermore, the produced films had reduced tensile strength in TD and decreased transparency due to the broad molecular weight distribution.

In the case of Comparative Example 22, the excessively high MI and MFRR resulted in processing viscosity that was too low to produce cast sheets with consistent thickness. Additionally, the low content of fractions eluted in the low-temperature region in TREF analysis led to inferior stretchability during film production.

In addition, Comparative Example 23 exhibited inferior stretchability during film production due to the low MI and high viscosity characteristics, while Comparative Example 24 had inferior stretchability during film production due to the high MI and low viscosity characteristics.

## Claims

**1.** A polyethylene resin composition satisfying the following conditions (a1) to (a5):

(a1) $MI_{2.16}$ (ASTM D 1238, 190 °C, 2.16 kg): 0.5 to 3.0 g/10 min
(a2) Density (ASTM D792): 0.940 to 0.955 g/cm$^3$
(a3) MFRR ($MI_{21.6}/MI_{2.16}$): 60 or more and less than 80
(a4) Molecular weight distribution (Mw/Mn): 10 to 14
(a5) In a temperature rising elution fractionation (TREF) analysis, based on a total weight of all eluted fractions,
a content of a polymer fraction eluted in the range of 25 to 90 °C: 20 to 50 wt%, and
a content of a polymer fraction eluted in the range of 90 to 120 °C: 50 to 80 wt%.

**2.** The polyethylene resin composition of Claim 1,
wherein the polyethylene resin composition satisfies the following conditions in the temperature rising elution fractionation (TREF) analysis:

based on the total weight of all eluted fractions,
a content of a polymer fraction eluted in the range of 40 to 70 °C: 1 to 30 wt%; and
a content of a polymer fraction eluted in the range of 100 to 105 °C: 30 to 45 wt%.

**3.** The polyethylene resin composition of Claim 1,
wherein the polyethylene resin composition further satisfies one or more of the following conditions (b1) to (b3):

(b1) Weight average molecular weight (Mw): 100,000 to 160,000 g/mol
(b2) Relaxation time: 0.1 to 0.9 seconds
(b3) Shear thinning index: 0.2 to 0.5.

**4.** The polyethylene resin composition of Claim 1,

wherein the polyethylene resin composition comprises a first polyethylene with a density (ASTM D792) of 0.950

$g/cm^3$ or more and a $MI_{2.16}$ (ASTM D1238, 190 °C, 2.16 kg) of 0.5 to 2 g/10min; and
a second polyethylene with a density (ASTM D792) of 0.925 $g/cm^3$ or less and a $MI_{2.16}$ (ASTM D1238, 190 °C, 2.16 kg) of 1 to 5 g/10min at a weight ratio of 90:10 to 70:30.

**5.** The polyethylene resin composition of Claim 4,
wherein the first polyethylene further satisfies the following conditions (c1) to (c5):

(c1) Density (ASTM D792): 0.950 to 0.965 $g/cm^3$
(c2) $MI_{2.16}$ (ASTM D1238, 190 °C, 2.16 kg): 0.5 to 2 g/10min
(c3) MFRR ($MI_{21.6}/MI_{2.16}$): 50 to 100
(c4) Weight average molecular weight (Mw): 130,000 to 160,000 g/mol
(c5) Molecular weight distribution (Mw/Mn): 10 to 16.

**6.** The polyethylene resin composition of Claim 4,
wherein the first polyethylene is one or more of an ethylene homopolymer and an ethylene/C4-C8 alpha olefin copolymer.

**7.** The polyethylene resin composition of Claim 4,
wherein the second polyethylene satisfies the following conditions (d1) to (d5):

(d1) Density (ASTM D792): 0.910 to 0.925 $g/cm^3$
(d2) $MI_{2.16}$ (ASTM D1238, 190 °C, 2.16 kg): 1 to 5 g/10min
(d3) MFRR ($MI_{21.6}/MI_{2.16}$): 10 to 50
(d4) Weight average molecular weight (Mw): 50,000 to 130,000 g/mol
(d5) Molecular weight distribution (Mw/Mn): 1 to 10.

**8.** The polyethylene resin composition of Claim 4,
wherein the second polyethylene is an ethylene/C4-C8 alpha olefin copolymer.

**9.** A method for preparing the polyethylene resin composition according to Claim 1, comprising

a first step of producing a first polyethylene by performing a primary polymerization reaction of ethylene in a first reactor in the presence of a Ziegler-Natta catalyst, transferring the resulting polymerization product to a second reactor, and adding one or more of ethylene and C4-C8 alpha olefin to perform a secondary polymerization reaction;
a second step of producing a second polyethylene by performing a polymerization reaction of ethylene and C4-C8 alpha-olefin in a separate single reactor in the presence of a catalyst comprising a metallocene compound represented by the following Chemical Formula 1 while introducing hydrogen; and
a third step of mixing the first polyethylene and the second polyethylene at a weight ratio of 90:10 to 70:30:

[Chemical Formula 1]

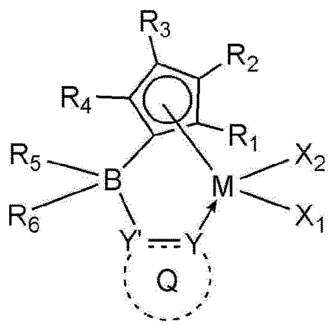

in Chemical Formula 1,

B is boron,
M is a group 4 transition metal,

$R_1$ to $R_4$ are each independently hydrogen, $C_{1-20}$ alkyl, $C_{3-20}$ cycloalkyl, or $C_{6-20}$ aryl, or $R_1$ and $R_2$, or $R_3$ and $R_4$ are connected to each other to form a substituted or unsubstituted $C_{6-60}$ aromatic ring,
$R_5$ and $R_6$ are each independently $C_{1-20}$ alkyl, $C_{3-20}$ cycloalkyl, or $C_{6-20}$ aryl, or $R_5$ and $R_6$ are connected to each other to form a $C_{3-60}$ aliphatic ring or a $C_{6-60}$ aromatic ring,
$X_1$ and $X_2$ are each independently $C_{1-20}$ alkyl or -O(CO)R', wherein R' is $C_{1-20}$ alkyl,
Q is a substituted or unsubstituted $C_{2-60}$ heterocyclic ring comprising at least one selected from the group consisting of N, O, and S,
Y and Y' are elements constituting Q,
Y is N, O, or S, and
Y' is an element of Q and is N or C, wherein Q is adjacent to Y.

**10.** The method for preparing the polyethylene resin composition of Claim 9, wherein the Ziegler-Natta catalyst is a magnesium-supported titanium catalyst.

**11.** The method for preparing the polyethylene resin composition of Claim 9, wherein the Ziegler-Natta catalyst further comprises a halogenated hydrocarbon.

**12.** The method for preparing the polyethylene resin composition of Claim 9, wherein the primary polymerization reaction in the first step is performed while introducing hydrogen gas in an amount of 0.001 to 0.5 wt% based on a total weight of the ethylene added to the first reactor.

**13.** The method for preparing the polyethylene resin composition of Claim 9, wherein the metallocene compound represented by Chemical Formula 1 is a compound represented by any one of the following chemical formulae:

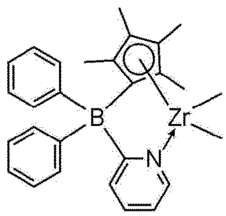
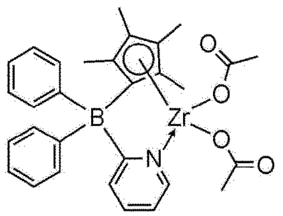
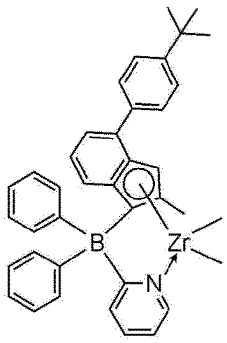

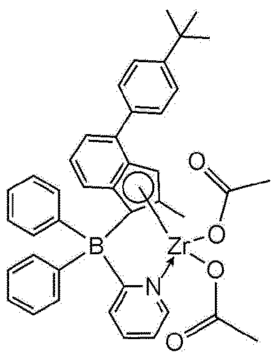
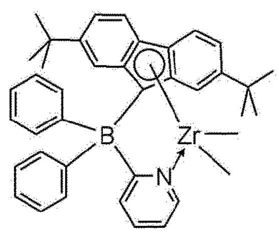
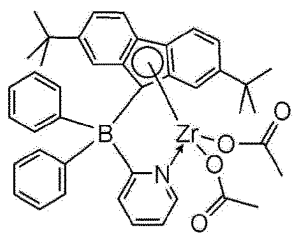

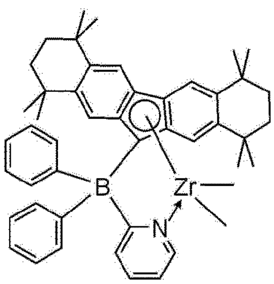
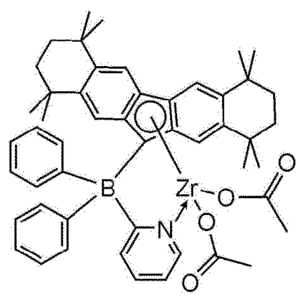
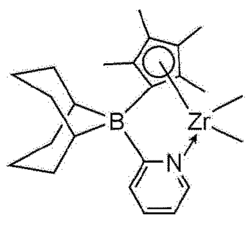

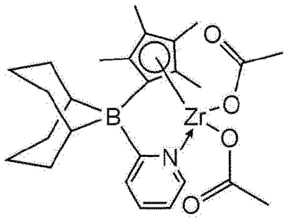
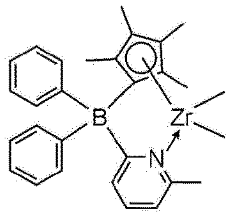
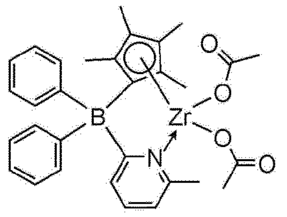

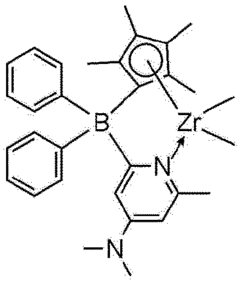
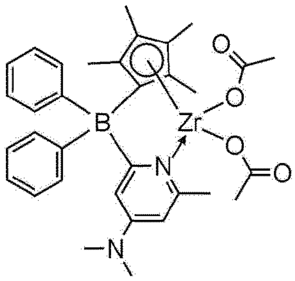
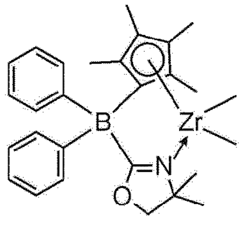

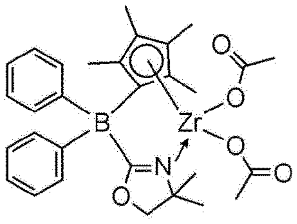
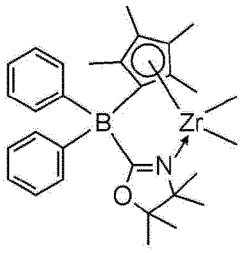
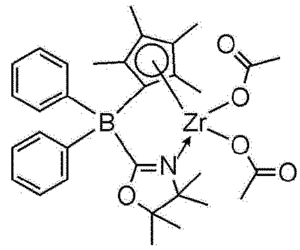

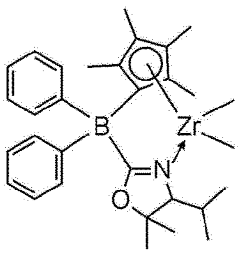
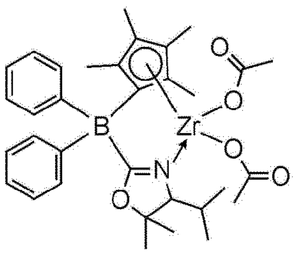
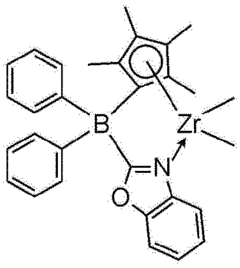

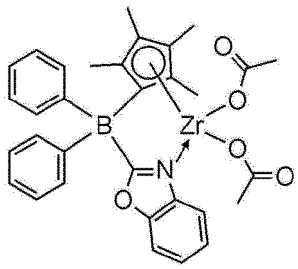
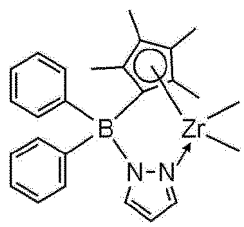
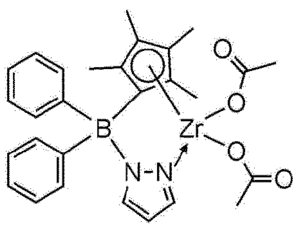

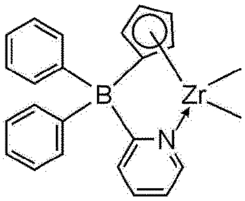
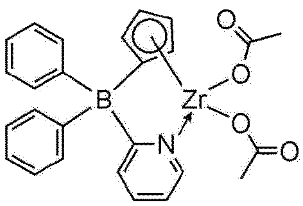
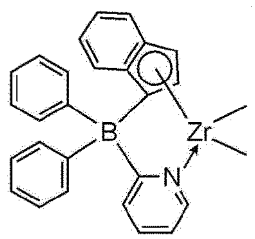

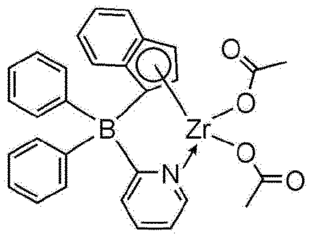

**14.** The method for preparing the polyethylene resin composition of Claim 9,
wherein the C4-C8 alpha-olefin monomer is added in an amount of 0.1 to 10 parts by weight based on 100 parts by weight of the ethylene monomer in the second step.

**15.** The method for preparing the polyethylene resin composition of Claim 9,
wherein the polymerization reaction in the second step is performed while introducing hydrogen gas in an amount of 0.0001 to 0.05 wt% based on a total weight of monomers comprising the ethylene monomer and the C4-C8 alpha olefin monomer.

**16.** A film comprising the polyethylene resin composition of Claim 1.

**17.** The film of Claim 16,
wherein the film satisfies the following conditions (e1) to (e3):

(e1) a tensile strength in MD direction is 100 MPa or more and a tensile strength in TD direction is 170 MPa or more, measured in accordance with ASTM D638 with a thickness of 2 mm
(e2) a 1% secant modulus in MD direction is 800 to 1400 MPa and a 1% secant modulus in TD direction is 1100 to 2300 MPa, measured in accordance with ASTM D882 with a thickness of 2 mm
(e3) a haze measured in accordance with the ISO 13468 standard when stretched at a stretching ratio of 5X8 (MD×TD) or higher and having a thickness of 20 μm: 30% or less.

【FIG. 1】

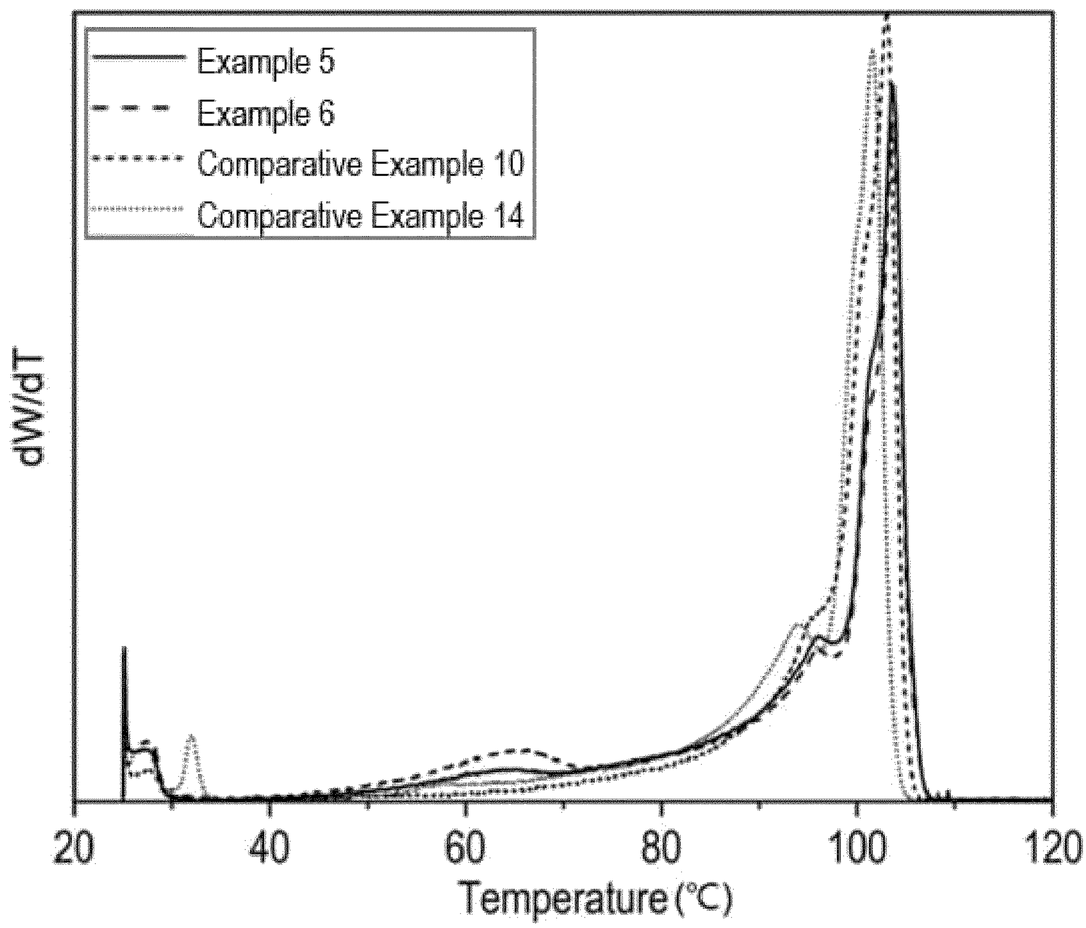
Example 5
Example 6
Comparative Example 10
Comparative Example 14
dW/dT
20
40
60
80
100
120
Temperature (℃)

**INTERNATIONAL SEARCH REPORT**

International application No. **PCT/KR2024/004219**

**A. CLASSIFICATION OF SUBJECT MATTER**

**C08L 23/04**(2006.01)i; **C08L 23/06**(2006.01)i; **C08L 23/08**(2006.01)i; **C08J 5/18**(2006.01)i; **C08F 10/02**(2006.01)i; **C08F 210/16**(2006.01)i; **C08F 4/16**(2006.01)i; **C08F 4/64**(2006.01)i

According to International Patent Classification (IPC) or to both national classification and IPC

**B. FIELDS SEARCHED**

Minimum documentation searched (classification system followed by classification symbols)

C08L 23/04(2006.01); B32B 27/32(2006.01); C08F 10/02(2006.01); C08F 110/02(2006.01); C08L 23/00(2006.01); C08L 23/06(2006.01); C08L 23/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 제1 폴리에틸렌(first polyethylene), 제2 폴리에틸렌(second polyethylene), 블렌드(blend), 메탈로센 촉매(metallocene catalyst), 지글러-나타 촉매(ziegler-natta catalyst), 멜트 인덱스(melt index, MI), 밀도(density), 분자량 분포(molecular weight distribution, MWD), 온도 상승 용출 분획(TREF)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2007-0041677 A (TOTAL PETROCHEMICALS RESEARCH FELUY) 19 April 2007 (2007-04-19)<br>See abstract; paragraphs [0005], [0019] and [0058]-[0090]; claims 1-12; and table 1. | 1-17 |
| Y | KR 10-2022-0076358 A (LG CHEM, LTD.) 08 June 2022 (2022-06-08)<br>See paragraphs [0143]-[0147]; and claims 12-15. | 1-17 |
| A | KR 10-2004-0047921 A (ATOFINA RES.) 05 June 2004 (2004-06-05)<br>See entire document. | 1-17 |
| A | US 7514504 B2 (VAN SINOY, A. et al.) 07 April 2009 (2009-04-07)<br>See entire document. | 1-17 |
| A | KR 10-2014-0002351 A (LOTTE CHEMICAL CORPORATION) 08 January 2014 (2014-01-08)<br>See entire document. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2024** | **28 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/004219**

**C. DOCUMENTS CONSIDERED TO BE RELEVANT**

| Category* | Citation of document, with indication, where appropriate, of the relevant passages | Relevant to claim No. |
|---|---|---|
| A | JP 2004-256613 A (SUMITOMO CHEM. CO., LTD. et al.) 16 September 2004 (2004-09-16) See entire document. | 1-17 |
| A | US 2014-0058039 A1 (DEWACHTER, D. et al.) 27 February 2014 (2014-02-27) See entire document. | 1-17 |

Form PCT/ISA/210 (second sheet) (July 2022)

**INTERNATIONAL SEARCH REPORT**
**Information on patent family members**

International application No.
**PCT/KR2024/004219**

| Patent document cited in search report | Publication date (day/month/year) | Patent family member(s) | Publication date (day/month/year) |
|---|---|---|---|
| KR 10-2007-0041677 A | 19 April 2007 | AT E557065 T1 | 15 May 2012 |
| | | CN 1957031 A | 02 May 2007 |
| | | CN 1957031 B | 16 June 2010 |
| | | EP 1584651 A1 | 12 October 2005 |
| | | EP 1730230 A1 | 13 December 2006 |
| | | EP 1730230 B1 | 09 May 2012 |
| | | ES 2385225 T3 | 19 July 2012 |
| | | JP 2007-530758 A | 01 November 2007 |
| | | WO 2005-092973 A1 | 06 October 2005 |
| KR 10-2022-0076358 A | 08 June 2022 | JP 2023-546710 A | 07 November 2023 |
| | | US 2024-0026041 A1 | 25 January 2024 |
| | | WO 2022-114904 A1 | 02 June 2022 |
| KR 10-2004-0047921 A | 05 June 2004 | CN 1320048 C | 06 June 2007 |
| | | CN 1596284 A | 16 March 2005 |
| | | EP 1304353 A1 | 23 April 2003 |
| | | EP 1453911 A1 | 08 September 2004 |
| | | EP 1453911 B1 | 09 January 2013 |
| | | JP 2005-505672 A | 24 February 2005 |
| | | US 2004-0249083 A1 | 09 December 2004 |
| | | US 7250474 B2 | 31 July 2007 |
| | | WO 03-033587 A1 | 24 April 2003 |
| US 7514504 B2 | 07 April 2009 | US 2005-0222338 A1 | 06 October 2005 |
| KR 10-2014-0002351 A | 08 January 2014 | KR 10-1384507 B1 | 10 April 2014 |
| JP 2004-256613 A | 16 September 2004 | None | |
| US 2014-0058039 A1 | 27 February 2014 | CN 103502349 A | 08 January 2014 |
| | | CN 103502349 B | 02 November 2018 |
| | | EP 2681273 A1 | 08 January 2014 |
| | | EP 2681273 B1 | 23 August 2017 |
| | | ES 2648297 T3 | 29 December 2017 |
| | | HU E036598 T2 | 30 July 2018 |
| | | PL 2681273 T3 | 31 January 2018 |
| | | PT 2681273 T | 14 November 2017 |
| | | RS 56541 B1 | 28 February 2018 |
| | | US 9228078 B2 | 05 January 2016 |
| | | WO 2012-119954 A1 | 13 September 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230063112
- KR 1020240044221

### Non-patent literature cited in the description

- *CHEMICAL ABSTRACTS*, 6683-19-8